(19) Europäisches Patentamt
European Patent Office
Office européen des brevets

(11) **EP 4 697 290 A1**

(12) **EUROPEAN PATENT APPLICATION**
published in accordance with Art. 153(4) EPC

(43) Date of publication:
**18.02.2026 Bulletin 2026/08**

(51) International Patent Classification (IPC):
**G06V 40/13** (2022.01)

(21) Application number: **24933186.9**

(22) Date of filing: **11.12.2024**

(86) International application number:
**PCT/CN2024/138588**

(87) International publication number:
**WO 2025/260646 (26.12.2025 Gazette 2025/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.06.2024 CN 202410777108**

(71) Applicant: **SHENZHEN GOODIX TECHNOLOGY CO., LTD.**
**Shenzhen, Guangdong 518045 (CN)**

(72) Inventors:
• **WU, Yangtao**
**Shenzhen, Guangdong 518045 (CN)**
• **LI, Mingcai**
**Shenzhen, Guangdong 518045 (CN)**
• **WANG, Bo**
**Shenzhen, Guangdong 518045 (CN)**

(74) Representative: **Kraus & Lederer PartGmbB**
**Thomas-Wimmer-Ring 15**
**80539 München (DE)**

(54) **ULTRASONIC FINGERPRINT DETECTION METHOD AND APPARATUS, AND ELECTRONIC DEVICE AND STORAGE MEDIUM**

(57) Embodiments of the present disclosure provide a method and apparatus for detecting a fingerprint with ultrasonic waves, an electronic device and a storage medium. The method for detecting a fingerprint with ultrasonic waves includes: acquiring a current temperature and/or a current film application state of a conductive medium, where a first side surface of the conductive medium is attached to an ultrasonic sensor, and a second side surface of the conductive medium provides a pressing surface; determining a number of ultrasonic emission times n based on the current temperature and/or the current film application state, where n is a positive integer; controlling the ultrasonic sensor to emit ultrasonic signals n times to the conductive medium, and receiving an echo signal formed after each emitted ultrasonic signal is reflected; and performing fingerprint detection based on the echo signal. The embodiments of the present disclosure may significantly reduce the impact of noise on fingerprint detection, and ensure the stability of fingerprint detection accuracy, so as to improve the performance of fingerprint detection.

```
                                                                    S110
acquiring a current temperature of a conductive medium, where a first
side surface of the conductive medium is attached to an ultrasonic
sensor, and a second side surface of the conductive medium provides a
                        pressing surface

                                                                    S120
determining a number of ultrasonic emission times n based on the
         current temperature; where n is a positive integer

                                                                    S130
controlling the ultrasonic sensor to emit ultrasonic signals n times to the
conductive medium, and receiving an echo signal formed after each
                  emitted ultrasonic signal is reflected

                                                                    S140
       performing fingerprint detection based on the echo signal
```

FIG. 1

EP 4 697 290 A1

## Description

CROSS-REFERENCE TO RELATED APPLICATIONS AND INCORPORATION BY REFERENCE

The present application claims the priority of Chinese Patent Application No. 202410777108.5 filed on June 17, 2024 and titled "METHOD AND APPARATUS FOR DETECTING FINGERPRINT WITH ULTRASONIC WAVES, ELECTRONIC DEVICE, AND STORAGE MEDIUM", the content of which is incorporated herein by reference in its entirety.

TECHNICAL FIELD

Embodiments of the present disclosure relate to the field of electronic technology, and in particular to a method and apparatus for detecting a fingerprint with ultrasonic waves, an electronic device and a storage medium.

BACKGROUND

Ultrasonic detection is a non-destructive detection technology that utilizes the interaction between ultrasonic waves and substances, and can be widely applied in various fields such as fingerprint detection and flaw detection. Currently, in related technologies that use ultrasonic sensors for fingerprint detection, conductive mediums such as screens or technical cover plates that are attached to ultrasonic sensors are usually used to provide a pressing surface for fingers. When performing fingerprint detection, ultrasonic signals are emitted by the ultrasonic sensors to the conductive mediums, and echo signals of the ultrasonic signals are received. The echo signals are then used for fingerprint detection.

However, there are still some drawbacks in the related technologies. For example, the ultrasonic signals emitted by the ultrasonic sensors experience certain loss when propagating through the conductive mediums. In related technologies, the intensity of the received echo signals is significantly reduced compared to the emitted ultrasonic signals, resulting in a significant increase in noise for the echo signals; in different usage scenarios (such as different temperatures), the loss of the ultrasonic signals in the conductive mediums usually varies as well. In related technologies, when facing different usage scenarios, the received echo signals may exhibit significant fluctuations, making it challenging to ensure the stability of fingerprint detection accuracy.

SUMMARY

In view of this, embodiments of the present disclosure provide a method and apparatus for detecting a fingerprint with ultrasonic waves, an electronic device and a storage medium, to at least partially solve the above problems.

According to a first aspect of embodiments of the present disclosure, a method for detecting a fingerprint with ultrasonic waves is provided, including: acquiring a current temperature and/or a current film application state of a conductive medium, where a first side surface of the conductive medium is attached to an ultrasonic sensor, and a second side surface of the conductive medium provides a pressing surface; determining a number of ultrasonic emission times n based on the current temperature and/or the current film application state, where n is a positive integer; controlling the ultrasonic sensor to emit ultrasonic signals n times to the conductive medium, and receiving an echo signal formed after each emitted ultrasonic signal is reflected; and performing fingerprint detection based on the echo signal.

In a possible implementation, the determining a number of ultrasonic emission times n based on the current temperature, includes: determining the number of ultrasonic emission times n based on the current temperature and first mapping information, where the first mapping information is used to indicate a mapping relationship between a temperature of the conductive medium and the number of ultrasonic emission times; the determining a number of ultrasonic emission times n based on the current film application state, includes: determining the number of ultrasonic emission times n based on the current film application state and second mapping information, where the second mapping information is used to indicate a mapping relationship between a film application state of the conductive medium and the number of ultrasonic emission times; and the determining a number of ultrasonic emission times n based on the current temperature and the current film application state, includes: determining the number of ultrasonic emission times n based on a current parameter combination and third mapping information, where the current parameter combination includes the current temperature and the current film application state, and the third mapping information is used to indicate a mapping relationship between the temperature and the film application state of the conductive medium, and the number of ultrasonic emission times.

In a possible implementation, the method further includes updating the first mapping information; and the updating the first mapping information, includes:

acquiring an updated temperature of the conductive medium; determining a number of ultrasonic emission times m mapped to the updated temperature, based on the updated temperature and the first mapping information; where m is a positive integer; controlling the ultrasonic sensor to emit ultrasonic signals m times to the conductive medium, and receiving an updated echo signal formed after each emitted ultrasonic signal is reflected, where a temperature of the conductive medium when the ultrasonic sensor emits the m ultrasonic signals is the updated temperature; superimposing the m updated echo signals to obtain an updated accumulated sum signal; and updating the number of ultrasonic emission times m based on an intensity of the updated accumulated sum signal and a preset signal intensity range.

In a possible implementation, the updating the number of ultrasonic emission times m based on an intensity of the updated accumulated sum signal and a preset signal intensity range, includes:

if the intensity of the updated accumulated sum signal is within the signal intensity range, updating the number of ultrasonic emission times m to remain m;
if the intensity of the updated accumulated sum signal is out of the signal intensity range, determining an updated number of ultrasonic emission times corresponding to the updated temperature according to a following formula:

$$N_{update} = m * P_{target}/P_{sample}\textrm{`}$$

Where, $N_{update}$ is used to indicate the updated number of ultrasonic emission times, $P_{target}$ is used to indicate a median of the signal intensity range, and $P_{sample}$. is used to indicate an intensity value of the updated accumulated sum signal; and
updating the number of ultrasonic emission times m to the updated number of ultrasonic emission times.

In a possible implementation, when the ultrasonic sensor emits the m ultrasonic signals, there is no finger pressing on the pressing surface, when an updated temperature of the conductive medium is acquired, there is no finger pressing on the pressing surface; and when the ultrasonic sensor emits the n ultrasonic signals to the conductive medium, there is a finger pressing on the pressing surface, when a current temperature of a conductive medium is acquired, there is a finger pressing on the pressing surface.

In a possible implementation, the first mapping information includes the temperature of the conductive medium, a number of ultrasonic emission times mapped to the temperature of the conductive medium, and an update state of the number of ultrasonic emission times; the determining the number of ultrasonic emission times n based on the current temperature and first mapping information, includes: determining a number of ultrasonic emission times mapped to the current temperature, based on the current temperature and the first mapping information; if an update state of the number of ultrasonic emission times mapped to the current temperature is marked as updated, determining the number of ultrasonic emission times mapped to the current temperature as the number of ultrasonic emission times n; or if an update state of the number of ultrasonic emission times mapped to the current temperature is not marked as updated, determining the number of ultrasonic emission times n, based on an update state of a number of ultrasonic emission times mapped to at least one candidate temperature adjacent to the current temperature.

In a possible implementation, the determining the number of ultrasonic emission times n, based on an update state of a number of ultrasonic emission times mapped to at least one candidate temperature adjacent to the current temperature, includes:

if there is the candidate temperature among the at least one candidate temperature whose mapped number of ultrasonic emission times is marked as updated, determining the number of ultrasonic emission times mapped to the candidate temperature whose update state of the mapped number of ultrasonic emission times is marked as updated and whose absolute difference from the current temperature is the smallest, as the number of ultrasonic emission times n; or if there is no candidate temperature among the at least one candidate temperature whose mapped number of ultrasonic emission times is marked as updated, determining the number of ultrasonic emission times mapped to the current temperature as the number of ultrasonic emission times n.

In a possible implementation, the determining a number of ultrasonic emission times mapped to the current temperature, based on the current temperature and the first mapping information, includes: determining a number of ultrasonic emission times mapped to a temperature closest to the current temperature in the first mapping information as the number of ultrasonic emission times mapped to the current temperature.

In a possible implementation, the first mapping information includes a mapping curve between the temperature of the conductive medium and the number of ultrasonic emission times; the determining the number of ultrasonic emission times n based on the current temperature and first mapping information, includes: mapping the current temperature to the number of ultrasonic emission times n using the mapping curve.

In a possible implementation, the determining a number of ultrasonic emission times n based on the current temperature, includes: determining the number of ultrasonic emission times n, based on the current temperature and a preset number of high-voltage pulses output to a piezoelectric chip upon emitting ultrasonic signals.

In a possible implementation, the performing fingerprint detection based on the echo signal, includes: superimposing the n echo signals to obtain a current accumulated sum signal, analyzing fingerprint image data based on the current accumulated sum signal, and performing fingerprint detection based on the fingerprint image data.

According to a second aspect of embodiments of the present disclosure, an apparatus for detecting a with ultrasonic waves is provided, including: an acquisition module, configured to acquire a current temperature and/or a current film application state of a conductive medium, where a first side surface of the conductive medium is attached to an ultrasonic sensor, and a second side surface of the conductive medium provides a pressing surface; an ultrasonic emission times determination module, configured to determine a number of ultrasonic emission times n based on the current temperature and/or the current film application state, where n is a positive integer; a signal collection module, configured to control the ultrasonic sensor to emit ultrasonic signals n times to the conductive medium, and to receive an echo signal formed after each emitted ultrasonic signal is reflected; and a fingerprint detection module, configured to perform fingerprint detection based on the echo signal.

According to a third aspect of embodiments of the present disclosure, an electronic device is provided, including: a processor, a memory, a communications interface and a communications bus, where the processor, the memory and the communications interface communicate with each other via the communications bus; the memory is configured to store at least one executable instruction, the executable instruction enables the processor to perform the method as described in any embodiment in the above first aspect.

According to a fourth aspect of embodiments of the present disclosure, a computer storage medium is provided, storing a computer program thereon, the program, when executed by a processor, implements the method as described in any embodiment in the above first aspect.

In the embodiments of the present disclosure, by acquiring the current temperature of the conductive medium, the number of ultrasonic emission times n may be determined based on the current temperature, based on the number of ultrasonic emission times n, the ultrasonic sensor may be controlled to emit ultrasonic signals n times to the conductive medium, and receive an echo signal formed after each emitted ultrasonic signal is reflected. The received echo signals may be superimposed and the current accumulated sum signal obtained by superposition may be used for fingerprint detection. Since the intensity of the current accumulated sum signal obtained by superimposing multiple echo signals is significantly improved compared with that of a single echo signal, the influence of a noise signal on the current accumulated sum signal is far weaker than on a single echo signal, therefore, using the current accumulated sum signal obtained by superimposing multiple echo signals may significantly reduce the influence of noise on fingerprint detection. In this embodiment, the ultrasonic sensor chip may accumulate the collected multiple echo signals, and then output a sum value, namely the current accumulated sum signal. The current accumulated sum signal may be understood as an accumulated sum of discrete sampling points in the time dimension. Since the echo signals are discrete in the time dimension, the echo signals may be understood as discrete sampling points. It should be noted that, each time an ultrasonic signal is emitted, an echo signal may be collected, and a piece of fingerprint image data may be obtained based on the echo signal. When emitting ultrasonic signals n times, n echo signals may be collected. After the n echo signals are accumulated, an enhanced piece of fingerprint image data may be obtained. Fingerprint detection may be performed based on feature points of the enhanced piece of fingerprint image data, which may significantly reduce the influence of noise. In addition, in embodiments of the present disclosure, when determining to emit an ultrasonic signal, the emitted ultrasonic signal can be adjusted based on the current temperature to ensure that in different temperature scenarios, the intensity of the accumulated sum signal obtained by superimposing the echo signals may be maintained within a certain range, thereby ensuring the stability of fingerprint detection accuracy, so as to improve the performance of fingerprint detection.

BRIEF DESCRIPTION OF DRAWINGS

In order to more clearly illustrate the technical solution in embodiments of the present disclosure or the prior art, the accompanying drawings to be used in the description of the embodiments or the prior art will be briefly introduced below. Obviously, the accompanying drawings in the following description are only some of the embodiments recorded in the embodiments of the present disclosure, and those of ordinary skill in the art may also obtain other accompanying drawings based on these accompanying drawings.

FIG. 1 is a flowchart of steps of a method for detecting a fingerprint with ultrasonic waves provided in an alternative embodiment of the present disclosure;
FIG. 2 is a schematic diagram of a propagation path of an ultrasonic signal according to an alternative embodiment of the present disclosure;
FIG. 3 is a flowchart of steps of another method for detecting a fingerprint with ultrasonic waves provided in an alternative embodiment of the present disclosure;
FIG. 4 is a schematic flowchart of updating mapping information provided in an alternative embodiment of the present disclosure;

FIG. 5 is a schematic flowchart of determining the number of ultrasonic emission times n provided in an alternative embodiment of the present disclosure;

FIG. 6 is a structural block diagram of an apparatus for detecting a fingerprint with ultrasonic waves provided in an alternative embodiment of the present disclosure; and

FIG. 7 is a structural schematic diagram of an electronic device provided in an alternative embodiment of the present disclosure.

DETAILED DESCRIPTION

In order to enable those in this art to better understand the technical solution in embodiments of the present disclosure, the technical solution in the embodiments of the present disclosure will be described clearly and completely in the following in conjunction with the accompanying drawings in the embodiments of the present disclosure. It is obvious that the described embodiments are only some of the embodiments in the embodiments of the present disclosure, but not all of the embodiments. Based on the embodiments of the present disclosure, all other embodiments obtained by those of ordinary skill in the art shall fall within the scope of protection of the embodiments of the present disclosure.

The terminology used in the present disclosure is used only for the purpose of describing particular embodiments and is not intended to limit the present disclosure. The singular forms of "a," "the," and "this" used in the present disclosure and the appended claims are also intended to include plural forms, unless the context clearly indicates otherwise. It should also be understood that the term "and/or" as used herein refers to and contains any or all possible combinations of one or more of the associated listed items.

It should be understood that while the terms "first", "second", "third", etc. may be used in the present disclosure to describe various types of information, such information should not be limited to these terms. These terms are only used to distinguish the same type of information from one another. For example, without departing from the scope of the present disclosure, first information may also be referred to as second information, and similarly, second information may be referred to as first information. Depending on the context, as used herein, the word "if" may be interpreted as "when...", "upon..." or "in response to determining".

The present disclosure provides a method and apparatus for detecting a fingerprint with ultrasonic waves, an electronic device and a storage medium, to at least partially solve the above problems existing in the related art. The method includes: acquiring a current temperature and/or a current film application state of a conductive medium, where a first side surface of the conductive medium is attached to an ultrasonic sensor, and a second side surface of the conductive medium provides a pressing surface; determining a number of ultrasonic emission times n based on the current temperature and/or the current film application state, where n is a positive integer; controlling the ultrasonic sensor to emit ultrasonic signals n times to the conductive medium, and receiving an echo signal formed after each emitted ultrasonic signal is reflected; and performing fingerprint detection based on the echo signal.

The method for detecting a fingerprint with ultrasonic waves provided in embodiments of the present disclosure is described in detail below in conjunction with the accompanying drawings and Embodiment 1, Embodiment 2, and Embodiment 3.

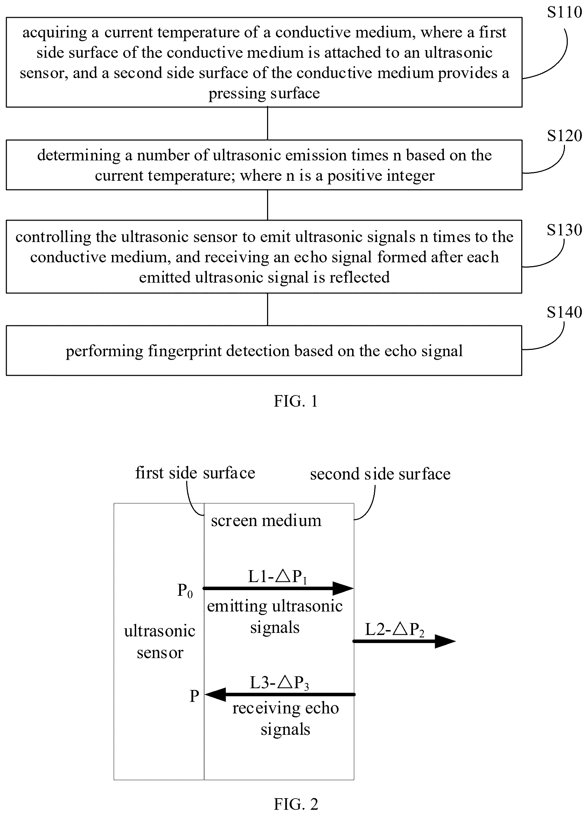

Embodiment 1: as shown in FIG. 1, a method for detecting a fingerprint with ultrasonic waves provided in this embodiment of the present disclosure includes:

S110: acquiring a current temperature of a conductive medium, where a first side surface of the conductive medium is attached to an ultrasonic sensor, and a second side surface of the conductive medium provides a pressing surface.

The ultrasonic sensor may be an under-screen ultrasonic sensor of a mobile phone or a side ultrasonic sensor, etc. Correspondingly, the conductive medium may be a panel of the mobile phone screen or a pressing cover plate on a side surface of the mobile phone that is attached to the ultrasonic sensor, etc. The first side surface and the second side surface of the conductive medium may be parallel to each other. In addition, in this embodiment of the present disclosure, a temperature of the conductive medium may be detected by a temperature sensor in the mobile phone, so as to acquire the current temperature of the conductive medium.

S120: determining a number of ultrasonic emission times n based on the current temperature; where n is a positive integer.

In this embodiment of the present disclosure, the number of times ultrasonic waves emitted for fingerprint detection may be determined based on the current temperature, that is, the number of ultrasonic emission times n. For example, when the current temperature is 20 degrees, n may be 30; when the current temperature is 25 degrees, n may be 38; when the current temperature is 30 degrees, n may be 38; when the current temperature is 35 degrees, n may be 45; when the current temperature is 40 degrees, n may be 42; when the current temperature is 45 degrees, n may be 38; when the current temperature is 50 degrees, n may be 36. Considering the influence of time consumption and power consumption, n does not exceed 200.

As a feasible implementation, several temperature ranges may be preset, and the number of ultrasonic emission times mapped to each temperature range may be set respectively. According to the temperature range where the current temperature is located, the number of ultrasonic emission times n may be determined by the number of ultrasonic emission times mapped to the temperature range. Alternatively, a mapping curve between temperature and number of ultrasonic emission times may be preset, and the current temperature may be mapped to the number of ultrasonic emission times n using the mapping curve.

S130: controlling the ultrasonic sensor to emit ultrasonic signals n times to the conductive medium, and receiving an echo signal formed after each emitted ultrasonic signal is reflected.

The main components in the ultrasonic sensor are a piezoelectric chip and two electrodes on both sides of the piezoelectric chip. When emitting ultrasonic signals, the ultrasonic sensor may output a high-voltage pulse to the piezoelectric chip through one of the electrodes on both sides of the piezoelectric chip to drive the piezoelectric chip to generate an ultrasonic signal. When receiving the ultrasonic echo signal, an ultrasonic detection device may convert the received ultrasonic echo signal into a voltage signal through the piezoelectric chip, and obtain features of the echo signal by collecting the voltage signal.

Exemplarily, a signal propagation path of an ultrasonic signal emitted by the ultrasonic sensor is as shown by L1-L3 in FIG. 2. An intensity P of the echo signal received by the ultrasonic sensor is:

$$P = P_0 - \Delta P_1 - \Delta P_2 - \Delta P_3 \cdots (\text{formula·1})$$

$P_0$ is used to indicate the intensity of the ultrasonic signal when it is emitted by the ultrasonic sensor, $\Delta P_1$ is used to indicate an intensity loss of the ultrasonic signal on the propagation path L1, $\Delta P_2$ is used to indicate an intensity loss caused by the ultrasonic signal propagating along L2 to the outside of the conductive medium, including an intensity loss caused by the ultrasonic signal propagating to the outside of the conductive medium and being reflected back to the conductive medium, and an intensity loss caused by the ultrasonic signal propagating to the outside of the conductive medium and no longer being reflected back to the conductive medium, and $\Delta P_3$ is used to indicate an intensity loss of the echo signal on the propagation path L3. It should be understood that the echo signal is an ultrasonic reflection signal formed by the ultrasonic signal being reflected by the second side surface of the conductive medium.

S140: performing fingerprint detection based on the echo signal.

After the ultrasonic sensor receives n echo signals corresponding to the ultrasonic signals emitted n times, the n echo signals may be superimposed to obtain a current accumulated sum signal with an intensity of $P_n$. It should be understood that superimposing the n echo signals is to add intensity values of the n echo signals. Sampling one echo signal is completed within small time range, and the intensity value of one echo signal may be understood as an integral value obtained by integrating the echo signal received in a single instance within its collection time range. In the process of emitting the ultrasonic signals n times, each time an ultrasonic signal is emitted, an echo signal of the ultrasonic signal is received. After completing the reception of the echo signal of a previously emitted ultrasonic signal, a next ultrasonic signal is emitted until n ultrasonic signals are emitted.

$P_n$ may be calculated according to the following formula:

$$P_n = n(P_0 - \Delta P_1 - \Delta P_2 - \Delta P_3) \cdots (\text{formula·2})$$

Obviously, when n is greater than 1, the intensity of the current accumulated sum signal is increased exponentially compared with that of a single echo signal. In this regard, the degree to which the current accumulated sum signal is influenced by noise is far less than that of a single echo signal.

In this embodiment of the present disclosure, by acquiring the current temperature of the conductive medium, the number of ultrasonic emission times n may be determined based on the current temperature, based on the number of ultrasonic emission times n, the ultrasonic sensor may be controlled to emit ultrasonic signals n times to the conductive medium, and receive an echo signal formed after each emitted ultrasonic signal is reflected. The received echo signals may be superimposed and the current accumulated sum signal obtained by superposition may be used for fingerprint detection. Since the intensity of the current accumulated sum signal obtained by superimposing multiple echo signals is significantly improved compared with that of a single echo signal, the influence of a noise signal on the current accumulated sum signal is far weaker than on a single echo signal, therefore, using the current accumulated sum signal obtained by superimposing multiple echo signals may significantly reduce the influence of noise on fingerprint detection. In this embodiment, the ultrasonic sensor chip may accumulate the collected multiple echo signals, and then output a sum value, namely the current accumulated sum signal. The current accumulated sum signal may be understood as an accumulated sum of discrete sampling points in the time dimension. Since the echo signals are discrete in the time dimension, the echo signals may be understood as discrete sampling points. It should be noted that, each time an ultrasonic signal is emitted, an echo signal may be collected, and a piece of fingerprint image data may be obtained based on the echo signal. When emitting ultrasonic signals n times, n echo signals may be collected. After the n echo signals are accumulated, an enhanced piece of fingerprint image data may be obtained. Fingerprint detection may be performed based on feature points of the enhanced piece of fingerprint image data, which may significantly reduce the influence of noise. In addition, in this embodiment of the present disclosure, when determining to emit an ultrasonic signal, the emitted ultrasonic signal can be adjusted based on the current temperature to ensure that in different temperature scenarios, the intensity of the current accumulated sum signal obtained by superimposing the echo signals may be maintained within a certain range, thereby ensuring the stability of fingerprint detection accuracy, so as to improve the performance of fingerprint detection.

Embodiment 2: another method for detecting a fingerprint with ultrasonic waves provided in this embodiment of the present disclosure includes:

acquiring a current film application state of a conductive medium, where a first side surface of the conductive medium is attached to an ultrasonic sensor, and a second side surface of the conductive medium provides a pressing surface; determining a number of ultrasonic emission times n based on the current film application state, where n is a positive integer; controlling the ultrasonic sensor to emit ultrasonic signals n times to the conductive medium, and receiving an echo signal formed after each emitted ultrasonic signal is reflected; and performing fingerprint detection based on the echo signal.

The film application state may include: whether a film is applied, a film material, a film thickness and other parameters, so as to determine the current film application state of the conductive medium using the parameters such as whether a film is currently applied, the film material, or the film thickness.

In this embodiment of the present disclosure, by acquiring the current film application state of the conductive medium, the number of ultrasonic emission times n may be determined based on the current film application state, based on the number of ultrasonic emission times n, the ultrasonic sensor may be controlled to emit ultrasonic signals n times to the conductive medium, and receive an echo signal formed after each emitted ultrasonic signal is reflected. The received echo signals may be superimposed and the current accumulated sum signal obtained by superposition may be used for fingerprint detection. Since the intensity of the current accumulated sum signal obtained by superimposing multiple echo signals is significantly improved compared with that of a single echo signal, the influence of a noise signal on the current accumulated sum signal is far weaker than on a single echo signal, therefore, using the current accumulated sum signal obtained by superimposing multiple echo signals may significantly reduce the influence of noise on fingerprint detection. In this embodiment, the ultrasonic sensor chip may accumulate the collected multiple echo signals, and then output a sum value, namely the current accumulated sum signal. The current accumulated sum signal may be understood as an accumulated sum of discrete sampling points in the time dimension. Since the echo signals are discrete in the time dimension, the echo signals may be understood as discrete sampling points. It should be noted that, each time an ultrasonic signal is emitted, an echo signal may be collected, and a piece of fingerprint image data may be obtained based on the echo signal. When emitting ultrasonic signals n times, n echo signals may be collected. After the n echo signals are accumulated, an enhanced piece of fingerprint image data may be obtained. Fingerprint detection may be performed based on feature points of the enhanced piece of fingerprint image data, which may significantly reduce the influence of noise. In addition, in this embodiment of the present disclosure, when determining the number of times to emit ultrasonic signals and collect echo signals, the number of times to emit ultrasonic signals and collect echo signals can be adjusted based on the current film application state to ensure that in different scenarios of film application states, the intensity of the current accumulated sum signal obtained by superimposing the echo signals may be maintained within a certain range, thereby ensuring the stability of fingerprint detection accuracy, so as to improve the performance of fingerprint detection. This Embodiment 2 is based on the same inventive concept as the technical solution of Embodiment 1 above, the technical solution of this embodiment may be obtained by correspondingly replacing the reference factor "current temperature/-temperature" of Embodiment 1 with "current film application state/film application state", and specific implementation of the technical solution of this embodiment may be referred to the description of Embodiment 1, detailed description thereof will be omitted herein.

Embodiment 3: yet another method for detecting a fingerprint with ultrasonic waves provided in this embodiment of the present disclosure includes:

acquiring a current parameter combination of a conductive medium, where the current parameter combination includes a current temperature and a current film application state, a first side surface of the conductive medium is attached to an ultrasonic sensor, and a second side surface of the conductive medium provides a pressing surface; determining a number of ultrasonic emission times n based on the current parameter combination, where n is a positive integer; controlling the ultrasonic sensor to emit ultrasonic signals n times to the conductive medium, and receiving an echo signal formed after each emitted ultrasonic signal is reflected; and performing fingerprint detection based on the echo signal. The film application state may include: whether a film is applied, a film material, a film thickness and other parameters, so as to determine the current temperature and the current film application state of the conductive medium using the parameters such as whether a film is currently applied, the film material, or the film thickness. It should be noted that each parameter combination in the following text of the present disclosure includes the corresponding temperature and film application state.

In this embodiment of the present disclosure, by acquiring the current parameter combination, i.e., acquiring the current temperature and the current film application state of the conductive medium, the number of ultrasonic emission times n may be determined based on the current temperature and the current film application state, based on the number of ultrasonic emission times n, the ultrasonic sensor may be controlled to emit ultrasonic signals n times to the conductive medium, and receive an echo signal formed after each emitted ultrasonic signal is reflected. The received echo signals may be superimposed and the current accumulated sum signal obtained by superposition may be used for fingerprint detection. Since the intensity of the current accumulated sum signal obtained by superimposing multiple echo signals is significantly improved compared with that of a single echo signal, the influence of a noise signal on the current accumulated sum signal is far weaker than on a single echo signal, therefore, using the current accumulated sum signal obtained by superimposing multiple echo signals may significantly reduce the influence of noise on fingerprint detection. In this embodiment, the ultrasonic sensor chip may accumulate the collected multiple echo signals, and then output a sum value, namely the current accumulated sum signal. The current accumulated sum signal may be understood as an accumulated sum of discrete sampling points in the time dimension. Since the echo signals are discrete in the time dimension, the echo signals may be understood as discrete sampling points. It should be noted that, each time an ultrasonic signal is emitted, an echo signal may be collected, and a piece of fingerprint image data may be obtained based on the echo signal. When emitting ultrasonic signals n times, n echo signals may be collected. After the n echo signals are accumulated, an enhanced piece of fingerprint image data may be obtained. Fingerprint detection may be performed based on feature points of the enhanced piece of fingerprint image data, which may significantly reduce the influence of noise. In addition, in this embodiment of the present disclosure, when determining the number of times to emit ultrasonic signals and collect echo signals, the number of times to emit ultrasonic signals and collect echo signals can be adjusted based on the current temperature and the current film application state to ensure that in different scenarios of temperature and film application states, the intensity of the current accumulated sum signal obtained by superimposing the echo signals may be maintained within a certain range, thereby ensuring the stability of fingerprint detection accuracy, so as to improve the performance of fingerprint detection. This Embodiment 3 is based on the same inventive concept as the technical solution of Embodiment 1 above, the technical solution of this embodiment may be obtained by correspondingly replacing the reference factor "current temperature/temperature" of Embodiment 1 with "current temperature/temperature" + "current film application state/film application state", and specific implementation of the technical solution of this embodiment may be referred to the description of Embodiment 1, detailed description thereof will be omitted herein.

As a feasible implementation, the intensity of the emitted ultrasonic signals and the intensity of the received echo signals may be enhanced by increasing the number of electrodes on both sides of the piezoelectric chip and increasing the number of high-voltage pulses output by the electrodes on both sides of the piezoelectric chip to the piezoelectric chip when emitting the ultrasonic signals. If in formula 1 and formula 2, when the number of high-voltage pulses output to the piezoelectric chip when emitting the ultrasonic signals is 1, $P_0$ is the intensity of the ultrasonic signals when emitted by the ultrasonic sensor, then, when the number of high-voltage pulses output to the piezoelectric chip when emitting the ultrasonic signals is $Tx_{num}$ ( $Tx_{num}$ is a positive integer), the intensity $P'$ of the echo signals corresponding to the ultrasonic signals is:

$$P' = Tx_{num}P_0 - \Delta P_1 - \Delta P_2 - \Delta P_3 \cdots (\text{formula·3})$$

The size of $Tx_{num}$ is usually set based on a frequency of the high-voltage pulse. For example, when the frequency of the high-voltage pulse output to the piezoelectric chip is between 10MHz and 12MHz, $Tx_{num}$ may be 5; when an excitation frequency is between 8MHz and 10MHz, $Tx_{num}$ may be 6.

It should be noted that if the number of high-voltage pulses output to the piezoelectric chip each time an ultrasonic signal is emitted is $Tx_{num}$, then after the ultrasonic sensor emits the ultrasonic signals n times and receives the corresponding n echo signals, the n echo signals are superimposed to obtain an updated accumulated sum signal whose intensity $P'_n$ is:

$$P'_n = n * P' \cdots (\text{formula·4})$$

In some alternative embodiments of Embodiment 1, the determining a number of ultrasonic emission times n based on the current temperature, includes: determining the number of ultrasonic emission times n, based on the current temperature and a preset number $Tx$ of high-voltage pulses output to a piezoelectric chip when emitting ultrasonic signals.

Exemplarily, a mapping relationship between different temperatures and the number of ultrasonic emission times n may be preset at different $Tx$, so that the corresponding number of ultrasonic emission times n may be determined based on the mapping relationship, *Tx* and the current temperature. Alternatively, a mapping relationship between different *Tx* and the number of ultrasonic emission times n may be preset at different temperatures, so that the corresponding number of ultrasonic emission times n may be determined based on the mapping relationship, *Tx* and the current temperature.

The number of high-voltage pulses is usually limited by the ultrasonic sensor hardware, so that the range for adjusting the number of high-voltage pulses is small. In this embodiment of the present disclosure, the number of ultrasonic emission times n is determined based on the current temperature and the preset number *Tx* of high-voltage pulses output to the piezoelectric chip when emitting ultrasonic signals, so that the ultrasonic signals may be continuously emitted multiple times and the corresponding echo signal may be received while the number *Tx* of high-voltage pulses is preset, which reduces the limitation of the hardware and may more flexibly enhance the intensity of the updated accumulated sum signal, so that the updated accumulated sum signal may more easily fall within a preset signal intensity range.

In some alternative embodiments of Embodiment 2, the determining a number of ultrasonic emission times n based on the current film application state, includes: determining the number of ultrasonic emission times n, based on the current film application state and a preset number *Tx* of high-voltage pulses output to a piezoelectric chip when emitting ultrasonic signals.

The number of high-voltage pulses is usually limited by the ultrasonic sensor hardware, so that the range for adjusting the number of high-voltage pulses is small. In this embodiment of the present disclosure, the number of ultrasonic emission times n is determined based on the current film application state and the preset number *Tx* of high-voltage pulses output to the piezoelectric chip when emitting ultrasonic signals, so that the ultrasonic signals may be continuously emitted multiple times and the corresponding echo signal may be received while the number *Tx* of high-voltage pulses is preset, which reduces the limitation of the hardware and may more flexibly enhance the intensity of the updated accumulated sum signal, so that the updated accumulated sum signal may more easily fall within a preset signal intensity range. The alternative embodiments of this Embodiment 2 are based on the same inventive concept as the alternative embodiments of Embodiment 1 above, the technical solution of the alternative embodiments of this Embodiment 2 may be obtained by correspondingly replacing the reference factor "current temperature/temperature" of the alternative embodiments of Embodiment 1 with "current film application state/film application state", and specific implementation of the technical solution of this embodiment may be referred to the related description of the alternative embodiments of Embodiment 1, detailed description thereof will be omitted herein.

In some alternative embodiments of Embodiment 3, the determining a number of ultrasonic emission times n based on the current parameter combination, includes: determining the number of ultrasonic emission times n, based on the current temperature and the current film application state and a preset number *Tx* of high-voltage pulses output to a piezoelectric chip when emitting ultrasonic signals.

The number of high-voltage pulses is usually limited by the ultrasonic sensor hardware, so that the range for adjusting the number of high-voltage pulses is small. In this embodiment of the present disclosure, the number of ultrasonic emission times n is determined based on the current temperature and the current film application state included in the current parameter combination and the preset number *Tx* of high-voltage pulses output to the piezoelectric chip when emitting ultrasonic signals, so that the ultrasonic signals may be continuously emitted multiple times and the corresponding echo signal may be received while the number *Tx* of high-voltage pulses is preset, which reduces the limitation of the hardware and may more flexibly enhance the intensity of the updated accumulated sum signal, so that the updated accumulated sum signal may more easily fall within a preset signal intensity range. The alternative embodiments of this Embodiment 3 are based on the same inventive concept as the alternative embodiments of Embodiment 1 above, the technical solution of the alternative embodiments of this Embodiment 3 may be obtained by correspondingly replacing the reference factor "current temperature/temperature" of the alternative embodiments of Embodiment 1 with "current temperature/temperature" + "current film application state/film application state", and specific implementation of the technical solution of this embodiment may be referred to the related description of the alternative embodiments of Embodiment 1, detailed description thereof will be omitted herein.

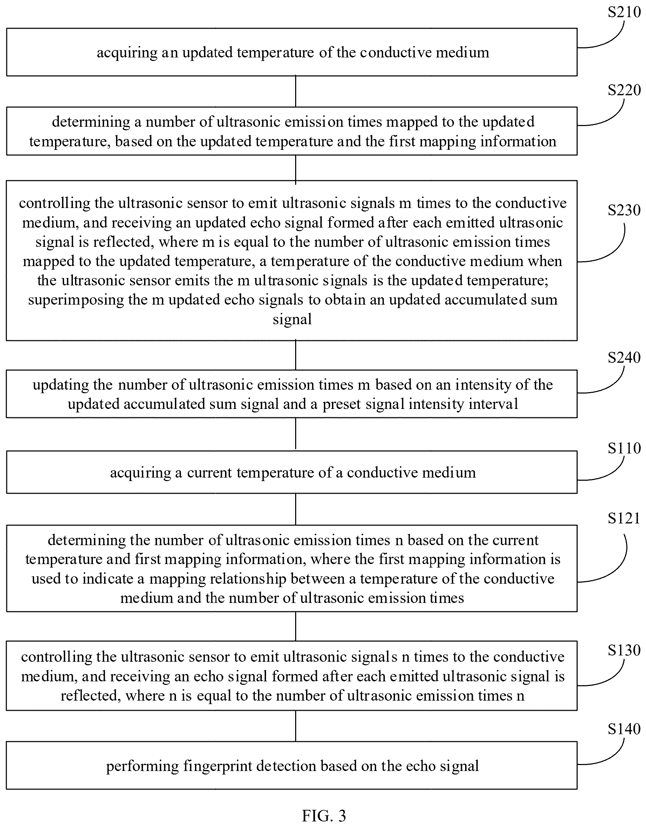

As shown in FIG. 3, in some alternative embodiments of Embodiment 1, the determining a number of ultrasonic emission times n based on the current temperature, may include:

S121: determining the number of ultrasonic emission times n based on the current temperature and first mapping information, where the first mapping information is used to indicate a mapping relationship between a temperature of the conductive medium and the number of ultrasonic emission times.

The first mapping information may be a first mapping information table including multiple temperatures and the number of ultrasonic emission times corresponding to each temperature. The temperature may be a single temperature value or a temperature range, both of which are within the protection scope of the embodiments of the present disclosure. The first mapping information may also be a mapping curve between the temperature of the conductive medium and the number of ultrasonic emission times, and the temperature of the conductive medium and the number of ultrasonic emission times may be horizontal and vertical coordinates of the midpoint of the mapping curve, respectively, so that the current temperature can be directly mapped to the number of ultrasonic emission times n using the mapping curve.

In this embodiment of the present disclosure, the mapping relationship between the temperature of the conductive medium and the number of ultrasonic emission times indicated by the first mapping information may be used to quickly determine the number of ultrasonic emission times n, without the need for complex calculations, which can improve the efficiency of fingerprint detection and effectively save computing power.

In some alternative embodiments of Embodiment 2, the determining a number of ultrasonic emission times n based on the current film application state, includes: determining the number of ultrasonic emission times n based on the current film application state and second mapping information, where the second mapping information is used to indicate a mapping relationship between a film application state of the conductive medium and the number of ultrasonic emission times.

In this embodiment of the present disclosure, the mapping relationship between the film application state of the conductive medium and the number of ultrasonic emission times indicated by the second mapping information may be used to quickly determine the number of ultrasonic emission times n, without the need for complex calculations, which can improve the efficiency of fingerprint detection and effectively save computing power. The alternative embodiments of this Embodiment 2 are based on the same inventive concept as the alternative embodiments of Embodiment 1 above, the technical solution of the alternative embodiments of this Embodiment 2 may be obtained by correspondingly replacing the reference factor "current temperature/temperature" of the alternative embodiments of Embodiment 1 with "current film application state/film application state", and specific implementation of the technical solution of this embodiment may be referred to the related description of the alternative embodiments of Embodiment 1, detailed description thereof will be omitted herein.

In some alternative embodiments of Embodiment 3, the determining a number of ultrasonic emission times n based on the current parameter combination, includes: determining the number of ultrasonic emission times n based on the current parameter combination and third mapping information, where the current parameter combination includes the current temperature and the current film application state, and the third mapping information is used to indicate a mapping relationship between the temperature and the film application state of the conductive medium, and the number of ultrasonic emission times.

In this embodiment of the present disclosure, the mapping relationship between the temperature and the film application state of the conductive medium, and the number of ultrasonic emission times indicated by the third mapping information may be used to quickly determine the number of ultrasonic emission times n, without the need for complex calculations, which can improve the efficiency of fingerprint detection and effectively save computing power. The alternative embodiments of this Embodiment 3 are based on the same inventive concept as the alternative embodiments of Embodiment 1 above, the technical solution of the alternative embodiments of this Embodiment 3 may be obtained by correspondingly replacing the reference factor "current temperature/temperature" of the alternative embodiments of Embodiment 1 with "current temperature/temperature" + "current film application state/film application state", and specific implementation of the technical solution of this embodiment may be referred to the related description of the alternative embodiments of Embodiment 1, detailed description thereof will be omitted herein.

As shown in FIG. 3, in some alternative embodiments of Embodiment 1, the method further includes updating the first mapping information; and the updating the first mapping information, includes:

S210: acquiring an updated temperature of the conductive medium.

S220: determining a number of ultrasonic emission times m mapped to the updated temperature, based on the updated temperature and the first mapping information; where m is a positive integer.

S230: controlling the ultrasonic sensor to emit ultrasonic signals m times to the conductive medium, and receiving an updated echo signal formed after each emitted ultrasonic signal is reflected, where a temperature of the conductive medium when the ultrasonic sensor emits the m ultrasonic signals is the updated temperature; superimposing the m updated echo signals to obtain an updated accumulated sum signal.

In this embodiment of the present disclosure, the first mapping information may be updated at a fixed moment or according to a fixed time range, or may be updated at a random moment. To realize that the temperature of the conductive medium when the ultrasonic sensor emits the m ultrasonic signals is the updated temperature, the updated temperature of the conductive medium may be acquired very close to the time when the ultrasonic sensor emits the m ultrasonic signals, for example, 0.1 seconds, 0.2 seconds, etc. before emitting the m ultrasonic signals. It should be understood that superimposing the m updated echo signals is to add intensity values of the m updated echo signals.

S240: updating the number of ultrasonic emission times m based on an intensity of the updated accumulated sum signal and a preset signal intensity range.

It should be understood that the updated accumulated sum signal obtained by superimposing the echo signals received by the ultrasonic sensor is an analog quantity, which may eventually be converted into a digital quantity through analog-to-digital conversion. The analog-to-digital conversion has a corresponding operating range, beyond which (too strong or too weak), accurate analog-to-digital conversion cannot be performed, showing the phenomenon of saturation and affecting the accuracy of subsequent fingerprint detection. To this end, in this embodiment of the present disclosure, the signal intensity range may be preset based on the operating range of the analog-to-digital conversion, and the intensity of the updated accumulated sum signal obtained by superimposing the echo signals may be controlled to be within the operating range of the analog-to-digital conversion.

When updating the number of ultrasonic emission times m mapped to the updated temperature in the first mapping information, the updated accumulated sum signal obtained by superimposing the updated echo signals may be compared with the preset signal intensity range. When the updated accumulated sum signal exceeds the preset signal intensity range, the number of ultrasonic emission times mapped to the updated temperature is updated, so that at the updated temperature, the intensity of the updated accumulated sum signal obtained according to the updated number of ultrasonic emission times is within the preset signal intensity range.

It should be noted that S210-S240 may be before S110-S140 or after S110-S140, and the embodiments of the present disclosure do not limit a sequence between S210-S240 and S110-S140, as long as both can be performed normally.

In this embodiment of the present disclosure, the updated temperature of the conductive medium may be continuously acquired, and the number of ultrasonic emission times m mapped to the updated temperature may be determined based on the updated temperature and the first mapping information. Based on the number of ultrasonic emission times m, the ultrasonic sensor may be controlled to emit ultrasonic signals m times to the conductive medium, and the updated echo signal formed after each emitted ultrasonic signal is reflected may be received. After the updated echo signals are superimposed to obtain the updated accumulated sum signal, when the updated accumulated sum signal exceeds the preset signal intensity range, the number of ultrasonic emission times m mapped to the updated temperature in the first mapping information is updated, so that when the subsequent temperature of the conductive medium is the updated temperature, the intensity of the updated accumulated sum signal obtained based on the updated number of ultrasonic emission times may be within the preset signal intensity range, thereby improving the accuracy of fingerprint detection.

In fact, in addition to temperature, other conditions or usage habits of users may also affect the loss of ultrasonic signals, such as whether the conductive medium includes a protective film such as a mobile phone film. When the conductive medium includes a mobile phone film, the mobile phone film may cause additional loss to the ultrasonic signal or the echo signal. It should be understood that the conductive medium in an embodiment of the present disclosure may be composed of multiple parts. For example, the conductive medium may include a mobile phone screen panel and a mobile phone film attached to the mobile phone screen panel. In this regard, the second side surface of the conductive medium is a side surface of the mobile phone film that contacts the finger.

In this embodiment of the present disclosure, the updated temperature may be acquired in real time, the updated echo signals may be collected, and the number of ultrasonic emission times in the first mapping information may be continuously updated, so that the number of ultrasonic emission times in the first mapping information may change synchronously with the conditions that affect the loss of ultrasonic signals. When the conditions that affect the loss of ultrasonic signals change, this embodiment of the present disclosure may obtain a more accurate number of ultrasonic emission times n based on the updated number of ultrasonic emission times, so that the intensity of the updated accumulated sum signal obtained thereafter is still within the preset signal intensity range, so as to ensure that the method provided in embodiments of the present disclosure is applicable in various usage scenarios or conditions. In addition, by continuously updating the number of ultrasonic emission times in the first mapping information, the number of ultrasonic emission times in the first mapping information may be adaptively adjusted in response to the usage habits of different users, so that the method provided in embodiments of the present disclosure may be applicable to different users.

In some alternative embodiments of Embodiment 2, the method further includes updating the second mapping information; and the updating the second mapping information, includes:

acquiring an updated film application state of the conductive medium; determining a number of ultrasonic emission times m mapped to the updated film application state, based on the updated film application state and the second mapping information; controlling the ultrasonic sensor to emit ultrasonic signals m times to the conductive medium, and receiving an updated echo signal formed after each emitted ultrasonic signal is reflected, where a film application state of the conductive medium when the ultrasonic sensor emits the m ultrasonic signals is the updated film application state; superimposing the m updated echo signals to obtain an updated accumulated sum signal; and updating the number of ultrasonic emission times m based on an intensity of the updated accumulated sum signal and a preset signal intensity range.

In this embodiment of the present disclosure, the updated film application state of the conductive medium may be continuously acquired, and the number of ultrasonic emission times m mapped to the updated film application state may be determined based on the updated film application state and the second mapping information. Based on the number of ultrasonic emission times m, the ultrasonic sensor may be controlled to emit ultrasonic signals m times to the conductive medium, and the updated echo signal formed after each emitted ultrasonic signal is reflected may be received. After the updated echo signals are superimposed to obtain the updated accumulated sum signal, when the updated accumulated sum signal exceeds the preset signal intensity range, the number of ultrasonic emission times m mapped to the updated film application state in the second mapping information is updated, so that when the subsequent film application state of the conductive medium is the updated film application state, the intensity of the updated accumulated sum signal obtained based on the updated number of ultrasonic emission times may be within the preset signal intensity range, thereby improving the accuracy of fingerprint detection. The alternative embodiments of this Embodiment 2 are based on the same inventive concept as the alternative embodiments of Embodiment 1 above, the technical solution of the alternative embodiments of this Embodiment 2 may be obtained by correspondingly replacing the reference factor "current temperature/temperature" of the alternative embodiments of Embodiment 1 with "current film application state/film application state", and specific implementation of the technical solution of this embodiment may be referred to the related description of the alternative embodiments of Embodiment 1, detailed description thereof will be omitted herein.

In some alternative embodiments of Embodiment 3, the method further includes updating the third mapping information; and the updating the third mapping information, includes:

acquiring an updated parameter combination of the conductive medium, where the updated parameter combination includes an updated temperature and an updated film application state; determining a number of ultrasonic emission times m mapped to the updated parameter combination, based on the updated parameter combination and the third mapping information; controlling the ultrasonic sensor to emit ultrasonic signals m times to the conductive medium, and receiving an updated echo signal formed after each emitted ultrasonic signal is reflected, where a temperature and a film application state of the conductive medium when the ultrasonic sensor emits the m ultrasonic signals is the updated temperature and the updated film application state, respectively; superimposing the m updated echo signals to obtain an updated accumulated sum signal; and updating the number of ultrasonic emission times m based on an intensity of the updated accumulated sum signal and a preset signal intensity range.

In this embodiment of the present disclosure, the updated parameter combination of the conductive medium may be continuously acquired, and the number of ultrasonic emission times m mapped to the updated parameter combination may be determined based on the updated parameter combination and the third mapping information. Based on the number of ultrasonic emission times m, the ultrasonic sensor may be controlled to emit ultrasonic signals m times to the conductive medium, and the updated echo signal formed after each emitted ultrasonic signal is reflected may be received. After the updated echo signals are superimposed to obtain the updated accumulated sum signal, when the updated accumulated sum signal exceeds the preset signal intensity range, the number of ultrasonic emission times m mapped to the updated temperature and the updated film application state in the updated parameter combination in the third mapping information is updated, so that when the subsequent temperature and film application state of the conductive medium is the updated temperature and the updated film application state in the updated parameter combination, the intensity of the updated accumulated sum signal obtained based on the updated number of ultrasonic emission times may be within the preset signal intensity range, thereby improving the accuracy of fingerprint detection. The alternative embodiments of this Embodiment 3 are based on the same inventive concept as the alternative embodiments of Embodiment 1 above, the technical solution of the alternative embodiments of this Embodiment 3 may be obtained by correspondingly replacing the reference factor "current temperature/temperature" of the alternative embodiments of Embodiment 1 with "current temperature/temperature" + "current film application state/film application state", and specific implementation of the technical solution of this embodiment may be referred to the related description of the alternative embodiments of Embodiment 1, detailed description thereof will be omitted herein.

In some alternative embodiments of Embodiment 1, the updating the number of ultrasonic emission times m based on an intensity of the updated accumulated sum signal and a preset signal intensity range, includes:

if the intensity of the updated accumulated sum signal is within the signal intensity range, updating the number of ultrasonic emission times m to remain m;

if the intensity of the updated accumulated sum signal is out of the signal intensity range, determining an updated number of ultrasonic emission times corresponding to the updated temperature according to the following formula to update the original ultrasonic emission times m corresponding to the updated temperature:

$$N_{\text{update}} = \text{m} * P_{\text{target}}/P_{\text{sample}}$$

where, $N_{\text{update}}$ is used to indicate the updated number of ultrasonic emission times corresponding to the updated temperature, $P_{\text{target}}$ is used to indicate a median of the signal intensity range, and $P_{\text{sample}}$ is used to indicate an intensity value of the updated accumulated sum signal; and

updating the number of ultrasonic emission times m to the updated number of ultrasonic emission times.

When the first mapping information is a mapping curve, after the number of ultrasonic emission times mapped to the updated temperature in the first mapping information is updated to the updated number of ultrasonic emission times, the updated temperature and $N_{\text{update}}$ may be used as a set of "temperature-number of ultrasonic emission times" samples to correct the mapping curve to improve an accuracy of the mapping curve.

In this embodiment of the present disclosure, according to the above formula, the updated number of ultrasonic emission times corresponding to the updated temperature may be determined based on the median of the preset signal intensity range, and by updating the number of ultrasonic emission times m mapped to the updated temperature in the first mapping information to the updated number of ultrasonic emission times, the intensity of the updated accumulated sum signal obtained based on the updated number of ultrasonic emission times may be near the median of the preset signal intensity, that is, the updated accumulated sum signal obtained based on the updated number of ultrasonic emission times can more easily fall within the preset signal intensity range, thereby ensuring the effect of analog-to-digital conversion on the updated accumulated sum signal.

In some alternative embodiments of Embodiment 2, the updating the number of ultrasonic emission times m based on an intensity of the updated accumulated sum signal and a preset signal intensity range, includes:

if the intensity of the updated accumulated sum signal is within the signal intensity range, updating the number of ultrasonic emission times m to remain m;
if the intensity of the updated accumulated sum signal is out of the signal intensity range, determining an updated number of ultrasonic emission times corresponding to the updated film application state according to the following formula:

$$N_{\text{update}} = m * P_{\text{target}}/P_{\text{sample}}$$

where, $N_{\text{update}}$ is used to indicate the updated number of ultrasonic emission times, $P_{\text{target}}$ is used to indicate a median of the signal intensity range, and $P_{\text{sample}}$ is used to indicate an intensity value of the updated accumulated sum signal; and
updating the number of ultrasonic emission times m to the updated number of ultrasonic emission times.

In this embodiment of the present disclosure, according to the above formula, the updated number of ultrasonic emission times corresponding to the updated film application state may be determined based on the median of the preset signal intensity range, and by updating the number of ultrasonic emission times m mapped to the updated film application state in the second mapping information to the updated number of ultrasonic emission times, the intensity of the updated accumulated sum signal obtained based on the updated number of ultrasonic emission times may be near the median of the preset signal intensity, that is, the updated accumulated sum signal obtained based on the updated number of ultrasonic emission times can more easily fall within the preset signal intensity range, thereby ensuring the effect of analog-to-digital conversion on the updated accumulated sum signal. The alternative embodiments of this Embodiment 2 are based on the same inventive concept as the alternative embodiments of Embodiment 1 above, the technical solution of the alternative embodiments of this Embodiment 2 may be obtained by correspondingly replacing the reference factor "current temperature/temperature" of the alternative embodiments of Embodiment 1 with "current film application state/film application state", and specific implementation of the technical solution of this embodiment may be referred to the related description of the alternative embodiments of Embodiment 1, detailed description thereof will be omitted herein.

In some alternative embodiments of Embodiment 3, the updating the number of ultrasonic emission times m based on an intensity of the updated accumulated sum signal and a preset signal intensity range, includes:

if the intensity of the updated accumulated sum signal is within the signal intensity range, updating the number of ultrasonic emission times m to remain m;
if the intensity of the updated accumulated sum signal is out of the signal intensity range, determining an updated number of ultrasonic emission times corresponding to the updated temperature and the updated film application state according to the following formula:

$$N_{\text{update}} = m * P_{\text{target}}/P_{\text{sample}}$$

where, $N_{\text{update}}$ is used to indicate the updated number of ultrasonic emission times, $P_{\text{target}}$ is used to indicate a median of the signal intensity range, and $P_{\text{sample}}$ is used to indicate an intensity value of the updated accumulated sum signal; and
updating the number of ultrasonic emission times m to the updated number of ultrasonic emission times.

In this embodiment of the present disclosure, according to the above formula, the updated number of ultrasonic emission times corresponding to the updated parameter combination may be determined based on the median of the preset signal intensity range, and by updating the number of ultrasonic emission times m mapped to the updated temperature and the updated film application state in the updated parameter combination in the three mapping information to the updated number of ultrasonic emission times, the intensity of the updated accumulated sum signal obtained based on the updated number of ultrasonic emission times may be near the median of the preset signal intensity, that is, the updated accumulated sum signal obtained based on the updated number of ultrasonic emission times can more easily fall within the preset signal intensity range, thereby ensuring the effect of analog-to-digital conversion on the updated accumulated sum signal. The alternative embodiments of this Embodiment 3 are based on the same inventive concept as the alternative embodiments of Embodiment 1 above, the technical solution of the alternative embodiments of this Embodiment 3 may be obtained by correspondingly replacing the reference factor "current temperature/temperature" of the alternative embodiments of Embodiment 1 with "current temperature/temperature" + "current film application state/film application state", and specific implementation of the technical solution of this embodiment may be referred to the related description of the alternative embodiments of Embodiment 1, detailed description thereof will be omitted herein.

In some alternative embodiments of Embodiment 1, when there is no finger pressing on the pressing surface, the mapping information is updated. In particular, when the ultrasonic sensor emits the m ultrasonic signals, there is no finger pressing on the pressing surface, when an updated temperature of the conductive medium is acquired, there is no finger pressing on the pressing surface. When there is a finger pressing on the pressing surface, fingerprint detection with ultrasonic waves is performed. In particular, when the ultrasonic sensor emits the n ultrasonic signals to the conductive medium, there is a finger pressing on the pressing surface, when a current temperature of a conductive medium is acquired, there is a finger pressing on the pressing surface.

When there is no finger pressing on the pressing surface, when the ultrasonic signals propagate to the outside of the conductive medium, most of the ultrasonic signals may be reflected back by an interface between the conductive medium and the air, and only a small part may enter the air. The loss of the ultrasonic signals is small, that is, $\Delta P_2$ in the above formulas 1-4 is small, and the echo signal received by the ultrasonic sensor is large. However, when there is a finger pressing on the pressing surface, when the ultrasonic signals propagate to the outside of the conductive medium, most of the ultrasonic signals may enter the finger, resulting in a large loss of the ultrasonic signals, even if $\Delta P_2$ in the above formula 1-4 becomes larger, thereby making the echo signal received by the ultrasonic sensor smaller. If the first mapping information is updated when there is a finger pressing on the pressing surface, the updated number of ultrasonic emission times may be too large. When the finger is lifted, the updated accumulated sum signal obtained by superimposing the collected echo signals may also be too large. When the analog-to-digital conversion is performed on the updated accumulated sum signal, saturation is likely to occur, resulting in the analog-to-digital conversion not being performed properly. Therefore, this embodiment of the present disclosure updates the mapping information when there is no finger pressing on the pressing surface. The update timing is after the finger is lifted and ultrasonic measurement is performed. The mapping information may not be updated when there is a finger pressing.

In this embodiment of the present disclosure, the first mapping information is updated when there is no finger pressing on the pressing surface. In particular, when there is no finger pressing on the pressing surface, the ultrasonic sensor may be controlled to emit the m ultrasonic signals to update the first mapping information, thereby avoiding the above problems and ensuring that the analog-to-digital conversion can be performed properly. When there is no finger pressing on the pressing surface, the updated temperature of the conductive medium is acquired, which may avoid a temperature of the finger from affecting the updated temperature of the conductive medium and reduce errors in acquiring the updated temperature. In addition, fingerprint detection with ultrasonic waves is performed when there is a finger pressing on the pressing surface. In particular, both acquiring the current temperature of the conductive medium and the ultrasonic sensor emitting the n ultrasonic signals to the conductive medium are executed when there is a finger pressing on the pressing surface, which may avoid executing a fingerprint detection procedure when there is no finger pressing, thereby saving power consumption.

In some alternative embodiments of Embodiment 2, in this embodiment of the present disclosure, when there is no finger pressing on the pressing surface, the second mapping information is updated. In particular, when the ultrasonic sensor emits the m ultrasonic signals, there is no finger pressing on the pressing surface, when an updated film application state of the conductive medium is acquired, there is no finger pressing on the pressing surface. In addition, when there is a finger pressing on the pressing surface, fingerprint detection with ultrasonic waves is performed, the ultrasonic sensor emits the n ultrasonic signals to the conductive medium, there is a finger pressing on the pressing surface, when a current film application state of a conductive medium is acquired, there is a finger pressing on the pressing surface.

In this embodiment of the present disclosure, the second mapping information is updated when there is no finger pressing on the pressing surface. In particular, when there is no finger pressing on the pressing surface, the ultrasonic sensor may be controlled to emit the m ultrasonic signals to update the second mapping information, thereby avoiding the above problems and ensuring that the analog-to-digital conversion can be performed properly. When there is no finger pressing on the pressing surface, the updated film application state of the conductive medium is acquired, which may avoid a film application state of the finger from affecting the updated film application state of the conductive medium and reduce errors in acquiring the updated film application state. In addition, fingerprint detection with ultrasonic waves is performed when there is a finger pressing on the pressing surface. In particular, both acquiring the current film application state of the conductive medium and the ultrasonic sensor emitting the n ultrasonic signals to the conductive medium are executed when there is a finger pressing on the pressing surface, which may avoid executing a fingerprint detection procedure when there is no finger pressing, thereby saving power consumption. The alternative embodiments of this Embodiment 2 are based on the same inventive concept as the alternative embodiments of Embodiment 1 above, the technical solution of the alternative embodiments of this Embodiment 2 may be obtained by correspondingly replacing the reference factor "current temperature/temperature" of the alternative embodiments of Embodiment 1 with "current film application state/film application state", and specific implementation of the technical solution of this embodiment may be referred to the related description of the alternative embodiments of Embodiment 1, detailed description thereof will be omitted herein.

In some alternative embodiments of Embodiment 3, in this embodiment of the present disclosure, when there is no finger pressing on the pressing surface, the third mapping information is updated. In particular, when the ultrasonic sensor emits the m ultrasonic signals, there is no finger pressing on the pressing surface, when an updated temperature and an updated film application state of the conductive medium are acquired, there is no finger pressing on the pressing surface. In addition, when there is a finger pressing on the pressing surface, fingerprint detection with ultrasonic waves is performed, the ultrasonic sensor emits the n ultrasonic signals to the conductive medium, there is a finger pressing on the pressing surface, when a current temperature and a current film application state of a conductive medium are acquired, there is a finger pressing on the pressing surface.

In this embodiment of the present disclosure, the third mapping information is updated when there is no finger pressing on the pressing surface. In particular, when there is no finger pressing on the pressing surface, the ultrasonic sensor may be controlled to emit the m ultrasonic signals to update the third mapping information, thereby avoiding the above problems and ensuring that the analog-to-digital conversion can be performed properly. When there is no finger pressing on the pressing surface, the updated temperature and the updated film application state of the conductive medium is acquired, which may avoid a temperature of the finger from affecting the updated temperature of the conductive medium and reduce errors in acquiring the updated temperature. In addition, fingerprint detection with ultrasonic waves is performed when there is a finger pressing on the pressing surface. In particular, acquiring the current temperature, the current film application state of the conductive medium and the ultrasonic sensor emitting the n ultrasonic signals to the conductive medium are all executed when there is a finger pressing on the pressing surface, which may avoid executing a fingerprint detection procedure when there is no finger pressing, thereby saving power consumption. The alternative embodiments of this Embodiment 3 are based on the same inventive concept as the alternative embodiments of Embodiment 1 above, the technical solution of the alternative embodiments of this Embodiment 3 may be obtained by correspondingly replacing the reference factor "current temperature/temperature" of the alternative embodiments of Embodiment 1 with "current temperature/temperature" + "current film application state/film application state", and specific implementation of the technical solution of this embodiment may be referred to the related description of the alternative embodiments of Embodiment 1, detailed description thereof will be omitted herein.

In some alternative embodiments of Embodiment 1, the first mapping information includes the temperature of the conductive medium, the number of ultrasonic emission times mapped to the temperature of the conductive medium, and an update state of the number of ultrasonic emission times.

The temperature of the conductive medium in the first mapping information may be a single temperature value or a temperature range. For example, the first mapping information may be the following Table 1:

Table 1: First mapping information table

| Temperature/°C | Number of ultrasonic emission times | Update state of number of ultrasonic emission times |
|---|---|---|
| -20 | a | Updated |
| -15 | a | Updated |
| -10 | b | Not updated |
| ...... | ...... | ...... |
| 40 | c | Not updated |
| 45 | d | Updated |
| 50 | e | Updated |

In Table 1, a, b, c, d, and e represent different numbers of ultrasonic emission times, and their values are positive integers. In this embodiment of the present disclosure, a temperature spacing in Table 1 may be reduced to reduce the granularity of the updated temperature, thereby improving the accuracy of determining the number of ultrasonic emission times n based on the updated temperature, so that the first mapping information may be better applied to ultrasonic sensors of various operating temperatures.

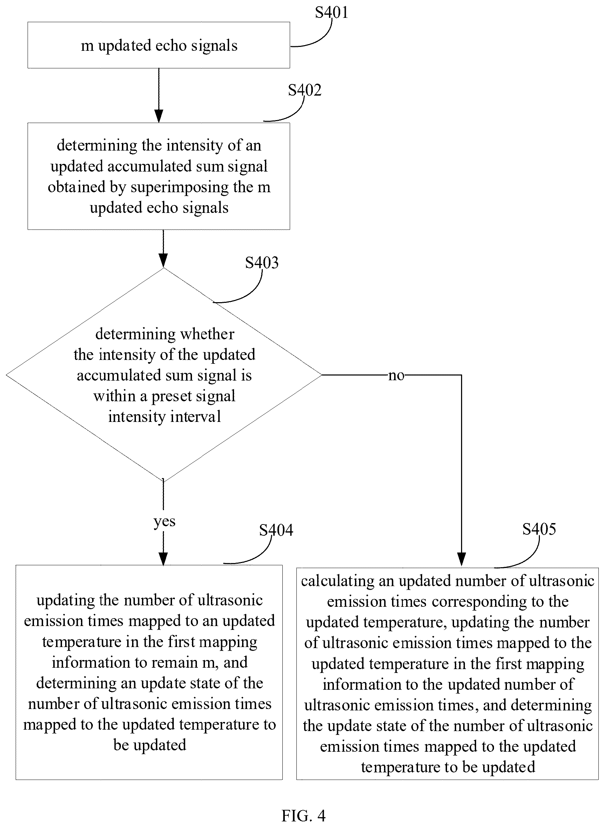

For ease of understanding, a flow of updating first mapping information in an embodiment of the present disclosure is illustrated below with reference to FIG. 4.

In FIG. 4, after obtaining m updated echo signals through S401, S402 may be performed to determine the intensity of an updated accumulated sum signal obtained by superimposing the m updated echo signals, and S403 may be performed to determine whether the intensity of the updated accumulated sum signal is within a preset signal intensity range. If the judgment result is yes, S404 may be performed to update the number of ultrasonic emission times mapped to an updated temperature in the first mapping information to remain m, and determine an update state of the number of ultrasonic emission times mapped to the updated temperature to be updated. If the judgment result is no, S405 may be performed to calculate an updated number of ultrasonic emission times corresponding to the updated temperature, for example, the updated number $N_{update}$ of ultrasonic emission times corresponding to the updated temperature may be calculated according to the above formula; update the number of ultrasonic emission times mapped to the updated temperature in the first mapping information to the updated number of ultrasonic emission times, and determine the update state of the number of ultrasonic emission times mapped to the updated temperature to be updated.

In this embodiment of the present disclosure, it may be determined whether the intensity of the updated accumulated sum signal is within the preset signal intensity range, and when the intensity of the updated accumulated sum signal is no longer within the preset signal intensity range, the number of ultrasonic emission times in the first mapping information may be updated, so that the intensity of the corresponding updated accumulated sum signal is again within the preset signal intensity range, and the update state of the number of ultrasonic emission times is determined to be updated to indicate that the number of ultrasonic emission times has high timeliness than when it is not updated. In addition, when the intensity of the updated accumulated sum signal is within the preset signal intensity range, the corresponding number of ultrasonic emission times may be kept at the original value, and the update state of the number of ultrasonic emission times may be determined to be updated to indicate that this number of ultrasonic emission times also has high timeliness.

Alternatively, the determining the number of ultrasonic emission times n based on the current temperature and first mapping information, includes:

determining a number of ultrasonic emission times mapped to the current temperature, based on the current temperature and the first mapping information.

As an alternative implementation, a number of ultrasonic emission times mapped to a temperature closest to the current temperature in the first mapping information may be determined as the number of ultrasonic emission times mapped to the current temperature.

Referring to Table 1, for example, if the current temperature is 43 degrees, the number of ultrasonic emission times d mapped to 45 degrees may be determined as the number of ultrasonic emission times mapped to the current temperature. In addition, when there are two temperatures closest to the current temperature in the first mapping information, the number of ultrasonic emission times mapped to the lower temperature may be selected as the number of ultrasonic emission times mapped to the current temperature, or the number of ultrasonic emission times mapped to the higher temperature may be selected as the number of ultrasonic emission times mapped to the current temperature, both of which are within the protection scope of the embodiments of the present disclosure.

In this embodiment of the present disclosure, when the current temperature is not equal to the temperature in the first mapping information, the number of ultrasonic emission times mapped to the temperature closest to the current temperature in the first mapping information may be determined as the number of ultrasonic emission times mapped to the current temperature, so that the number of ultrasonic emission times mapped to the current temperature may be determined simply and quickly, which can improve the efficiency of fingerprint detection with ultrasonic waves.

Of course, in the embodiments of the present disclosure, other suitable methods may also be used to determine the number of ultrasonic emission times mapped to the current temperature. For example, the current temperature may be interpolated in the temperature included in the first mapping information, and the number of ultrasonic emission times mapped to the current temperature may be determined by using the interpolation method, which are all within the protection scope of the embodiments of the present disclosure.

If an update state of the number of ultrasonic emission times mapped to the current temperature in the first mapping information is marked as updated, determining the number of ultrasonic emission times mapped to the current temperature as the number of ultrasonic emission times n.

If an update state of the number of ultrasonic emission times mapped to the current temperature in the first mapping information is not marked as updated, determining the number of ultrasonic emission times n, based on an update state of a number of ultrasonic emission times mapped to at least one candidate temperature adjacent to the current temperature in the first mapping information.

The candidate temperature may be several temperatures adjacent to the current temperature in the first mapping information, for example, may be temperatures that are not the closest to the current temperature among the first few temperatures (such as 5 or 7, which may be preset as needed) with the smallest difference from the current temperature.

In this embodiment of the present disclosure, the first mapping information includes the temperature of the conductive medium, the number of ultrasonic emission times mapped to the temperature of the conductive medium, and the update state of the number of ultrasonic emission times. When determining the number of ultrasonic emission times n, the number of ultrasonic emission times mapped to the current temperature may be determined based on the current temperature and the first mapping information. When the update state of the number of ultrasonic emission times mapped to the current temperature is marked as updated, the number of ultrasonic emission times mapped to the current temperature may be determined as the number of ultrasonic emission times n. When the update state of the number of ultrasonic emission times mapped to the current temperature is not marked as updated, the number of ultrasonic emission times n may be determined based on the update state of the number of ultrasonic emission times mapped to the at least one candidate temperature adjacent to the current temperature. The data update state in the first mapping information can be used to select the updated number of ultrasonic emission times as the number of ultrasonic emission times n as much as possible, to ensure the timeliness of the number of ultrasonic emission times n, and to avoid untimely updates of the number of ultrasonic emission times affecting the effect of fingerprint detection.

In some alternative embodiments of Embodiment 2, the second mapping information includes the film application state of the conductive medium, the number of ultrasonic emission times mapped to the film application state of the conductive medium, and an update state of the number of ultrasonic emission times;

the determining the number of ultrasonic emission times n based on the current film application state and second mapping information, includes:

determining a number of ultrasonic emission times mapped to the current film application state, based on the current film application state and the second mapping information;

if an update state of the number of ultrasonic emission times mapped to the current film application state is marked as updated, determining the number of ultrasonic emission times mapped to the current film application state as the number of ultrasonic emission times n;

if an update state of the number of ultrasonic emission times mapped to the current film application state is not marked as updated, determining the number of ultrasonic emission times n, based on an update state of a number of ultrasonic emission times mapped to at least one candidate film application state adjacent to the current film application state.

In this embodiment of the present disclosure, the second mapping information includes the film application state of the conductive medium, the number of ultrasonic emission times mapped to the film application state of the conductive medium, and the update state of the number of ultrasonic emission times. When determining the number of ultrasonic emission times n, the number of ultrasonic emission times mapped to the current film application state may be determined based on the current film application state and the second mapping information. When the update state of the number of ultrasonic emission times mapped to the current film application state is marked as updated, the number of ultrasonic emission times mapped to the current film application state may be determined as the number of ultrasonic emission times n. When the update state of the number of ultrasonic emission times mapped to the current film application state is not marked as updated, the number of ultrasonic emission times n may be determined based on the update state of the number of ultrasonic emission times mapped to the at least one candidate film application state adjacent to the current film application state. The data update state in the second mapping information can be used to select the updated number of ultrasonic emission times as the number of ultrasonic emission times n as much as possible, to ensure the timeliness of the number of ultrasonic emission times n, and to avoid untimely updates of the number of ultrasonic emission times affecting the effect of fingerprint detection. The alternative embodiments of this Embodiment 2 are based on the same inventive concept as the alternative embodiments of Embodiment 1 above, the technical solution of the alternative embodiments of this Embodiment 2 may be obtained by correspondingly replacing the reference factor "current temperature/temperature" of the alternative embodiments of Embodiment 1 with "current film application state/film application state", and specific implementation of the technical solution of this embodiment may be referred to the related description of the alternative embodiments of Embodiment 1, detailed description thereof will be omitted herein.

In some alternative embodiments of Embodiment 3, the third mapping information includes the temperature, the film application state of the conductive medium, the number of ultrasonic emission times mapped to the temperature and the film application state of the conductive medium, and an update state of the number of ultrasonic emission times;

the determining the number of ultrasonic emission times n based on the current parameter combination and third mapping information, includes:

determining a number of ultrasonic emission times mapped to the current parameter combination, based on the current parameter combination and the third mapping information;

if an update state of the number of ultrasonic emission times mapped to the current parameter combination is marked as updated, determining the number of ultrasonic emission times mapped to the current parameter combination as the number of ultrasonic emission times n;

if an update state of the number of ultrasonic emission times mapped to the current parameter combination is not marked as updated, determining the number of ultrasonic emission times n, based on an update state of a number of ultrasonic emission times mapped to at least one candidate parameter combination adjacent to the current parameter combination; where, the candidate parameter combination includes a candidate temperature and a candidate film application state.

In this embodiment of the present disclosure, the third mapping information includes the temperature, the film application state of the conductive medium, the number of ultrasonic emission times mapped to the temperature and the film application state of the conductive medium, and the update state of the number of ultrasonic emission times. When determining the number of ultrasonic emission times n, the number of ultrasonic emission times mapped to the current parameter combination may be determined based on the current temperature, the current film application state and the third mapping information. When the update state of the number of ultrasonic emission times mapped to the current parameter combination is marked as updated, the number of ultrasonic emission times mapped to the current parameter combination may be determined as the number of ultrasonic emission times n. When the update state of the number of ultrasonic emission times mapped to the current parameter combination is not marked as updated, the number of ultrasonic emission times n may be determined based on the update state of the number of ultrasonic emission times mapped to the at least one candidate parameter combination adjacent to the current parameter combination. The data update state in the third mapping information can be used to select the updated number of ultrasonic emission times as the number of ultrasonic emission times n as much as possible, to ensure the timeliness of the number of ultrasonic emission times n, and to avoid untimely updates of the number of ultrasonic emission times affecting the effect of fingerprint detection. The alternative embodiments of this Embodiment 3 are based on the same inventive concept as the alternative embodiments of Embodiment 1 above, the technical solution of the alternative embodiments of this Embodiment 3 may be obtained by correspondingly replacing the reference factor "current temperature/temperature" of the alternative embodiments of Embodiment 1 with "current temperature/temperature" + "current film application state/film application state", and specific implementation of the technical solution of this embodiment may be referred to the related description of the alternative embodiments of Embodiment 1, detailed description thereof will be omitted herein.

In some alternative embodiments of Embodiment 1, the determining the number of ultrasonic emission times n, based on an update state of a number of ultrasonic emission times mapped to at least one candidate temperature adjacent to the current temperature, includes:

if there is the candidate temperature among the at least one candidate temperature whose mapped number of ultrasonic emission times is marked as updated, determining the number of ultrasonic emission times mapped to the candidate temperature whose update state of the mapped number of ultrasonic emission times is marked as updated and whose absolute difference from the current temperature is the smallest, as the number of ultrasonic emission times n. If there is no candidate temperature among the at least one candidate temperature whose mapped number of ultrasonic emission times is marked as updated, determining the number of ultrasonic emission times mapped to the current temperature as the number of ultrasonic emission times n.

It should be understood that there may be multiple candidate temperatures, and the update state of the number of ultrasonic emission times mapped to each candidate temperature may be determined respectively based on the first mapping information.

When there is only one number of ultrasonic emission times mapped to the candidate temperature whose update state is updated, this number of ultrasonic emission times mapped to the candidate temperature may be determined as the number of ultrasonic emission times n.

When there are multiple numbers of ultrasonic emission times mapped to the candidate temperatures whose update state is updated, the number of ultrasonic emission times mapped to the candidate temperature whose update state of the mapped number of ultrasonic emission times is marked as updated and whose absolute difference from the current temperature is the smallest may be determined as the number of ultrasonic emission times n.

Of course, other suitable methods may be used to determine the number of ultrasonic emission times n. For example, when the update state of the numbers of ultrasonic emission times mapped to multiple candidate temperatures is updated, an average of the numbers of ultrasonic emission times mapped to these candidate temperatures may be taken, and this average may be determined as the number of ultrasonic emission times n.

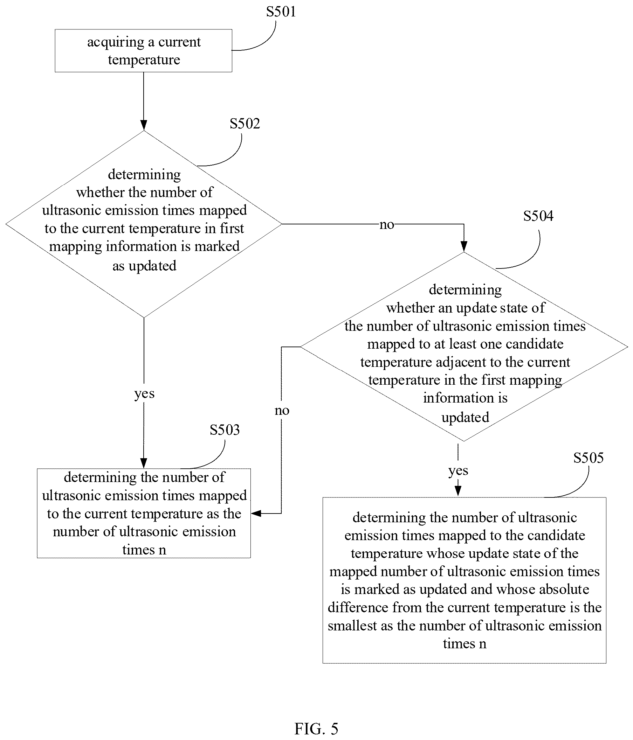

For ease of understanding, a flow of determining the number of ultrasonic emission times n in an embodiment of the present disclosure is illustrated below with reference to FIG. 5.

In FIG. 5, after a current temperature is acquired in S501, S502 may be performed to determine whether the number of ultrasonic emission times mapped to the current temperature in first mapping information is marked as updated. If the judgment result is yes, S503 is performed to determine the number of ultrasonic emission times mapped to the current temperature as the number of ultrasonic emission times n. If the judgment result is no, S504 may be performed to determine whether an update state of the number of ultrasonic emission times mapped to at least one candidate temperature adjacent to the current temperature in the first mapping information is updated; if the judgment result is yes, S505 is performed to determine the number of ultrasonic emission times mapped to the candidate temperature whose update state of the mapped number of ultrasonic emission times is marked as updated and whose absolute difference from the current temperature is the smallest as the number of ultrasonic emission times n; if the judgment result is no, S503 is performed to determine the number of ultrasonic emission times mapped to the current temperature as the number of ultrasonic emission times n.

In this embodiment of the present disclosure, when there is the candidate temperature among the at least one candidate temperature whose mapped number of ultrasonic emission times is marked as updated, the number of ultrasonic emission times n may be determined based on the number of ultrasonic emission times mapped to the candidate temperature whose update state of the mapped number of ultrasonic emission times is marked as updated, so as to select the updated number of ultrasonic emission times as the number of ultrasonic emission times n as much as possible, to ensure the timeliness of the number of ultrasonic emission times n, and to avoid errors in fingerprint detection caused by untimely updates. Moreover, when there is no candidate temperature among the at least one candidate temperature whose mapped number of ultrasonic emission times is marked as updated, the number of ultrasonic emission times mapped to the current temperature may still be determined as the number of ultrasonic emission times n, so as to ensure the smooth progress of fingerprint detection with ultrasonic waves.

In some alternative embodiments of Embodiment 2, the determining the number of ultrasonic emission times n, based on an update state of a number of ultrasonic emission times mapped to at least one candidate film application state adjacent to the current film application state, includes:

If there is the candidate film application state among the at least one candidate film application state whose mapped number of ultrasonic emission times is marked as updated, determining the number of ultrasonic emission times mapped to the candidate film application state whose update state of the mapped number of ultrasonic emission times is marked as updated and whose absolute difference from the current film application state is the smallest as the number of ultrasonic emission times n. Exemplarily, each parameter in the candidate film application state may be used as its coordinate component, the parameter value in the current film application state may be used as its coordinate component, and a distance such as the Euclidean distance or Chebyshev distance between the candidate film application state and the current film application state may be used as the difference between the two. Of course, other methods may also be used to determine the difference between the candidate film application state and the current film application state, all of which are within the protection scope of the embodiments of the present disclosure.

If there is no candidate film application state among the at least one candidate film application state whose mapped number of ultrasonic emission times is marked as updated, determining the number of ultrasonic emission times mapped to the current film application state as the number of ultrasonic emission times n.

In this embodiment of the present disclosure, when there is the candidate film application state among the at least one candidate film application state whose mapped number of ultrasonic emission times is marked as updated, the number of ultrasonic emission times n may be determined based on the number of ultrasonic emission times mapped to the candidate film application state whose update state of the mapped number of ultrasonic emission times is marked as updated, so as to select the updated number of ultrasonic emission times as the number of ultrasonic emission times n as much as possible, to ensure the timeliness of the number of ultrasonic emission times n, and to avoid errors in fingerprint detection caused by untimely updates. Moreover, when there is no candidate film application state among the at least one candidate film application state whose mapped number of ultrasonic emission times is marked as updated, the number of ultrasonic emission times mapped to the current film application state may still be determined as the number of ultrasonic emission times n, so as to ensure the smooth progress of fingerprint detection with ultrasonic waves. The alternative embodiments of this Embodiment 2 are based on the same inventive concept as the alternative embodiments of Embodiment 1 above, the technical solution of the alternative embodiments of this Embodiment 2 may be obtained by correspondingly replacing the reference factor "current temperature/temperature" of the alternative embodiments of Embodiment 1 with "current film application state/film application state", and specific implementation of the technical solution of this embodiment may be referred to the related description of the alternative embodiments of Embodiment 1, detailed description thereof will be omitted herein.

In some alternative embodiments of Embodiment 3, the determining the number of ultrasonic emission times n, based on an update state of a number of ultrasonic emission times mapped to at least one candidate parameter combination adjacent to the current parameter combination, includes:

If there is the candidate parameter combination among the at least one candidate parameter combination whose mapped number of ultrasonic emission times is marked as updated, determining the number of ultrasonic emission times mapped to the candidate parameter combination whose update state of the mapped number of ultrasonic emission times is marked as updated and whose absolute difference from the current parameter combination is the smallest as the number of ultrasonic emission times n. Exemplarily, each parameter in the candidate parameter combination may be used as its coordinate component, the parameter value in the current parameter combination may be used as its coordinate component, and a distance such as the Euclidean distance or Chebyshev distance between the candidate parameter combination and the current parameter combination may be used as the difference between the two. Of course, other methods may also be used to determine the difference between the candidate parameter combination and the current parameter combination, all of which are within the protection scope of the embodiments of the present disclosure.

If there is no candidate parameter combination among the at least one candidate parameter combination whose mapped number of ultrasonic emission times is marked as updated, determining the number of ultrasonic emission times mapped to the current parameter combination as the number of ultrasonic emission times n.

In this embodiment of the present disclosure, when there is the candidate parameter combination among the at least one candidate parameter combination whose mapped number of ultrasonic emission times is marked as updated, the number of ultrasonic emission times n may be determined based on the number of ultrasonic emission times mapped to the candidate parameter combination whose update state of the mapped number of ultrasonic emission times is marked as updated, so as to select the updated number of ultrasonic emission times as the number of ultrasonic emission times n as much as possible, to ensure the timeliness of the number of ultrasonic emission times n, and to avoid errors in fingerprint detection caused by untimely updates. Moreover, when there is no candidate parameter combination among the at least one candidate parameter combination whose mapped number of ultrasonic emission times is marked as updated, the number of ultrasonic emission times mapped to the current parameter combination may still be determined as the number of ultrasonic emission times n, so as to ensure the smooth progress of fingerprint detection with ultrasonic waves. The alternative embodiments of this Embodiment 3 are based on the same inventive concept as the alternative embodiments of Embodiment 1 above, the technical solution of the alternative embodiments of this Embodiment 3 may be obtained by correspondingly replacing the reference factor "current temperature/temperature" of the alternative embodiments of Embodiment 1 with "current temperature/temperature" + "current film application state/film application state", and specific implementation of the technical solution of this embodiment may be referred to the related description of the alternative embodiments of Embodiment 1, detailed description thereof will be omitted herein.

In some alternative embodiments of Embodiment 2, the determining a number of ultrasonic emission times mapped to the current film application state, based on the current film application state and the second mapping information, includes:

determining a number of ultrasonic emission times mapped to a film application state closest to the current film application state in the second mapping information as the number of ultrasonic emission times mapped to the current film application state. The film application state closest to the current film application state may be determined by calculating the film application state having the smallest distance such as the Euclidean distance or Chebyshev distance from the current film application state. The calculation method using the distance such as the Euclidean distance or Chebyshev distance may refer to related technologies, detailed description thereof will be omitted herein.

In this embodiment of the present disclosure, when the current film application state is not equal to the film application state in the second mapping information, the number of ultrasonic emission times mapped to the film application state closest to the current film application state in the second mapping information may be determined as the number of ultrasonic emission times mapped to the current film application state, so that the number of ultrasonic emission times mapped to the current film application state may be determined simply and quickly, which can improve the efficiency of fingerprint detection with ultrasonic waves. The alternative embodiments of this Embodiment 2 are based on the same inventive concept as the alternative embodiments of Embodiment 1 above, the technical solution of the alternative embodiments of this Embodiment 2 may be obtained by correspondingly replacing the reference factor "current temperature/temperature" of the alternative embodiments of Embodiment 1 with "current film application state/film application state", and specific implementation of the technical solution of this embodiment may be referred to the related description of the alternative embodiments of Embodiment 1, detailed description thereof will be omitted herein.

In some alternative embodiments of Embodiment 3, the determining a number of ultrasonic emission times mapped to the current parameter combination, based on the current parameter combination and the third mapping information, includes:

determining a number of ultrasonic emission times mapped to a parameter combination closest to the current parameter combination in the third mapping information as the number of ultrasonic emission times mapped to the current parameter combination. The parameter combination closest to the current parameter combination may be determined by calculating the parameter combination having the smallest distance such as the Euclidean distance or Chebyshev distance from the current parameter combination. The calculation method using the distance such as the Euclidean distance or Chebyshev distance may refer to related technologies, detailed description thereof will be omitted herein.

In this embodiment of the present disclosure, when the current parameter combination is not equal to the parameter combination in the third mapping information, the number of ultrasonic emission times mapped to the parameter combination closest to the current parameter combination in the third mapping information may be determined as the number of ultrasonic emission times mapped to the current parameter combination, so that the number of ultrasonic emission times mapped to the current parameter combination may be determined simply and quickly, which can improve the efficiency of fingerprint detection with ultrasonic waves. The alternative embodiments of this Embodiment 3 are based on the same inventive concept as the alternative embodiments of Embodiment 1 above, the technical solution of the alternative embodiments of this Embodiment 3 may be obtained by correspondingly replacing the reference factor "current temperature/temperature" of the alternative embodiments of Embodiment 1 with "current temperature/temperature" + "current film application state/film application state", and specific implementation of the technical solution of this embodiment may be referred to the related description of the alternative embodiments of Embodiment 1, detailed description thereof will be omitted herein.

In some alternative embodiments of Embodiment 1, the first mapping information includes a mapping curve between the temperature of the conductive medium and the number of ultrasonic emission times. The determining the number of ultrasonic emission times n based on the current temperature and first mapping information, includes: mapping the current temperature to the number of ultrasonic emission times n using the mapping curve.

It should be understood that the mapping curve may be in the form of a curve graph or in the form of a functional relationship, both of which are within the protection scope of the embodiments of the present disclosure. When determining the number of ultrasonic emission times n, only the current temperature needs to be input, and the number of ultrasonic emission times n may be obtained using the fitting curve.

In this embodiment of the present disclosure, the first mapping information includes the mapping curve between the temperature of the conductive medium and the number of ultrasonic emission times. The temperature value of the current temperature may be directly mapped to the number of ultrasonic emission times n using the continuous mapping curve, so that the number of ultrasonic emission times n corresponding to the current temperature can be determined more accurately, thereby improving the accuracy of fingerprint detection.

As a feasible implementation, a default mapping curve may be specified, and then in the process of performing fingerprint detection with ultrasonic waves, the number of ultrasonic emission times enabling the updated accumulated sum signal to be fall within the preset signal intensity range when the conductive medium is at various temperatures is continuously recorded, so as to obtain multiple sets of "temperature-number of ultrasonic emission times" samples, and the mapping curve is continuously corrected using the multiple sets of "temperature-number of ultrasonic emission times" samples. As the number of "temperature-number of ultrasonic emission times" samples increases, the accuracy of the mapping curve may also be continuously improved.

In some alternative embodiments of Embodiment 2, the second mapping information includes a mapping curve between the film application state of the conductive medium and the number of ultrasonic emission times;

the determining the number of ultrasonic emission times n based on the current film application state and second mapping information, includes:
mapping the current film application state to the number of ultrasonic emission times n using the mapping curve.

In this embodiment of the present disclosure, the second mapping information includes the mapping curve between the film application state of the conductive medium and the number of ultrasonic emission times. The current film application state may be directly mapped to the number of ultrasonic emission times n using the continuous mapping curve, so that the number of ultrasonic emission times n corresponding to the current film application state can be determined more accurately, thereby improving the accuracy of fingerprint detection. The alternative embodiments of this Embodiment 2 are based on the same inventive concept as the alternative embodiments of Embodiment 1 above, the technical solution of the alternative embodiments of this Embodiment 2 may be obtained by correspondingly replacing the reference factor "current temperature/temperature" of the alternative embodiments of Embodiment 1 with "current film application state/film application state", and specific implementation of the technical solution of this embodiment may be referred to the related description of the alternative embodiments of Embodiment 1, detailed description thereof will be omitted herein.

In some alternative embodiments of Embodiment 3, the third mapping information includes a mapping curve between the temperature and the film application state of the conductive medium, and the number of ultrasonic emission times;

the determining the number of ultrasonic emission times n based on the current parameter combination and third mapping information, includes:
mapping the current parameter combination including the temperature and the film application state to the number of ultrasonic emission times n using the mapping curve.

In this embodiment of the present disclosure, the third mapping information includes the mapping curve between the temperature and the film application state of the conductive medium, and the number of ultrasonic emission times. The current parameter combination including the temperature and the film application state may be directly mapped to the number of ultrasonic emission times n using the continuous mapping curve, so that the number of ultrasonic emission times n corresponding to the current parameter combination can be determined more accurately, thereby improving the accuracy of fingerprint detection. The alternative embodiments of this Embodiment 3 are based on the same inventive concept as the alternative embodiments of Embodiment 1 above, the technical solution of the alternative embodiments of this Embodiment 3 may be obtained by correspondingly replacing the reference factor "current temperature/temperature" of the alternative embodiments of Embodiment 1 with "current temperature/temperature" + "current film application state/film application state", and specific implementation of the technical solution of this embodiment may be referred to the related description of the alternative embodiments of Embodiment 1, detailed description thereof will be omitted herein.

In some alternative embodiments of Embodiment 1, Embodiment 2 and Embodiment 3, the performing fingerprint detection based on the echo signal, includes:

superimposing the n echo signals to obtain a current accumulated sum signal, analyzing fingerprint image data based on the current accumulated sum signal, and performing fingerprint detection based on the fingerprint image data.

In this embodiment, the ultrasonic sensor chip may accumulate the collected multiple echo signals, and then output a sum value, namely the current accumulated sum signal. In particular, each time an ultrasonic signal is emitted, an echo signal may be collected, and a piece of fingerprint image data may be obtained based on the echo signal. Similarly, based on the current accumulated sum signal obtained by accumulation, an enhanced piece of fingerprint image data may be obtained. Fingerprint detection may be performed based on feature points of the enhanced piece of fingerprint image data, which may significantly reduce the influence of noise.

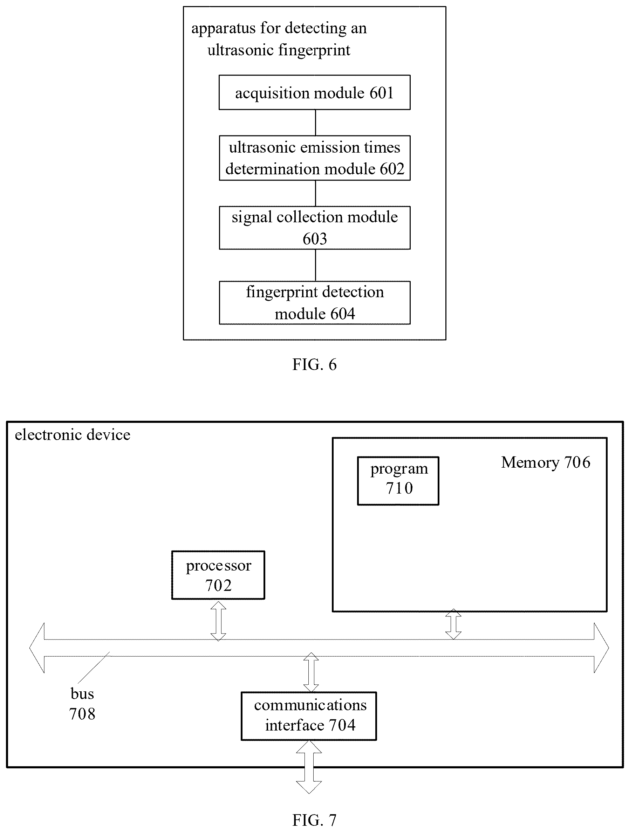

According to a second aspect of embodiments of the present disclosure, as shown in FIG. 6, an apparatus for detecting a fingerprint with ultrasonic waves is provided, including:

an acquisition module 601, is configured to acquire a current temperature and/or a current film application state of a conductive medium, where a first side surface of the conductive medium is attached to an ultrasonic sensor, and a second side surface of the conductive medium provides a pressing surface.

an ultrasonic emission times determination module 602, is configured to determine a number of ultrasonic emission times n based on the current temperature and/or the current film application state.

a signal collection module 603, is configured to control the ultrasonic sensor to emit ultrasonic signals n times to the conductive medium, and to receive an echo signal formed after each emitted ultrasonic signal is reflected, where n is equal to the number of ultrasonic emission times n.

a fingerprint detection module 604, is configured to perform fingerprint detection based on the echo signal.

The apparatus for detecting a fingerprint with ultrasonic waves in this embodiment is based on the same inventive concept as the embodiments of the method for detecting a fingerprint with ultrasonic waves as described above, is used to implement the corresponding method for detecting a fingerprint with ultrasonic waves in the aforementioned multiple method embodiments, and has the beneficial effects of the corresponding method embodiments, detailed description thereof will be omitted herein. In addition, functional implementation of the units in the apparatus for detecting a fingerprint with ultrasonic waves in this embodiment may refer to the description of the corresponding parts in the aforementioned method embodiments, detailed description thereof will be omitted herein.

According to a third aspect of embodiments of the present disclosure, an electronic device is provided, and the embodiments of the present disclosure do not limit specific implementation of the electronic device.

As shown in FIG. 7, the electronic device may include: a processor 702, a communications interface 704, a memory 706, and a communications bus 708.

In which:

The processor 702, the communications interface 704, and the memory 706 communicate with each other via the communications bus 708.

The communications interface 704 is configured to communicate with other electronic devices or servers.

The processor 702 is configured to execute a program 710, may specifically execute relevant steps in the above method embodiments of the method for detecting a fingerprint with ultrasonic waves.

Specifically, the program 710 may include a program code, which includes an executable instruction, and the executable instruction may be a computer operation instruction.

The processor 702 may be a CPU, or an Application Specific Integrated Circuit (ASIC), or one or more integrated circuits configured to implement embodiments of the present disclosure. One or more processors included in a smart device may be processors of the same type, such as one or more CPUs; or different types of processors, such as one or more CPUs and one or more ASICs.

The memory 706 is configured to store the program 710. The memory 706 may include a high-speed RAM memory, and may also include a non-volatile memory, such as at least one disk memory.

The program 710 may include multiple executable instructions. The program 710 may specifically enable the processor 702 to execute operations corresponding to the method for detecting a fingerprint with ultrasonic waves described in any one of the aforementioned method embodiments through the multiple executable instructions.

Specific implementation of each step in the program 710 may refer to the corresponding description of the corresponding step and unit in the aforementioned method embodiments, and has the corresponding beneficial effects, detailed description thereof will be omitted herein. Those skilled in the art may clearly understand that for the convenience and simplicity of description, the specific working process of the above-described devices and modules may refer to the corresponding process description in the aforementioned method embodiments, detailed description thereof will be omitted herein.

According to a fourth aspect of embodiments of the present disclosure, a computer storage medium is provided, storing a computer program thereon, the program, when executed by a processor, implements the method described in any one of the aforementioned method embodiments. The computer storage medium includes, but is not limited to: a Compact Disc Read-Only Memory (CD-ROM), a Random Access Memory (RAM), a floppy disk, a hard disk, or a magneto-optical disk, etc.

Embodiments of the present disclosure also provide a computer program product, including computer instructions, the computer instructions instruct a computing device to perform operations corresponding to the method for detecting a fingerprint with ultrasonic waves described in any one of the aforementioned method embodiments.

It should be noted that depending on the needs of implementation, the various components/steps described in the embodiments of the present disclosure may be divided into more components/steps, or two or more components/-steps, or parts of the components/steps, may be combined into new components/steps to achieve the objectives of the embodiments of the present disclosure.

Those skilled in the art may recognize that the units and method steps described in the examples disclosed herein in the embodiments can be implemented using electronic hardware, or a combination of computer software and electronic hardware. Whether these functions are executed in hardware or software depends on the specific application and design constraints of the technical solution. Those skilled in the art may use different methods to implement the described functions for each specific application, but such implementation should not be considered to fall outside the scope of the embodiments of the present disclosure.

The above embodiments are provided for illustrative purposes only and are not intended to limit the scope of the present disclosure. Those skilled in the art may make various changes and modifications without departing from the spirit and scope of the embodiments of the present disclosure. Therefore, all equivalent technical solutions also fall within the scope of the embodiments of the present disclosure, and the scope of patent protection of the embodiments of the present disclosure should be defined by the claims.

**Claims**

1. A method for detecting a fingerprint with ultrasonic waves, comprising:

   acquiring a current temperature and/or a current film application state of a conductive medium, wherein a first side surface of the conductive medium is attached to an ultrasonic sensor, and a second side surface of the conductive medium provides a pressing surface;
   determining a number of ultrasonic emission times n based on the current temperature and/or the current film application state, wherein n is a positive integer;
   controlling the ultrasonic sensor to emit ultrasonic signals n times to the conductive medium, and receiving an echo signal formed after each emitted ultrasonic signal is reflected; and
   performing fingerprint detection based on the echo signal.

2. The method according to claim 1, wherein,
   the determining a number of ultrasonic emission times n based on the current temperature, comprises:

   determining the number of ultrasonic emission times n based on the current temperature and first mapping information, wherein the first mapping information is used to indicate a mapping relationship between a temperature of the conductive medium and the number of ultrasonic emission times;
   the determining a number of ultrasonic emission times n based on the current film application state, comprises:

      determining the number of ultrasonic emission times n based on the current film application state and second mapping information, wherein the second mapping information is used to indicate a mapping relationship between a film application state of the conductive medium and the number of ultrasonic emission times ; and
      the determining a number of ultrasonic emission times n based on the current temperature and the current film application state, comprises:
      determining the number of ultrasonic emission times n based on a current parameter combination and third mapping information, wherein the current parameter combination comprises the current temperature and the current film application state, and the third mapping information is used to indicate a mapping relationship between the temperature and the film application state of the conductive medium, and the number of ultrasonic emission times.

3. The method according to claim 2, wherein the method further comprises updating the first mapping information; and the updating the first mapping information, comprises:

   acquiring an updated temperature of the conductive medium;
   determining a number of ultrasonic emission times m mapped to the updated temperature, based on the updated temperature and the first mapping information; wherein m is a positive integer;
   controlling the ultrasonic sensor to emit ultrasonic signals m times to the conductive medium, and receiving an updated echo signal formed after each emitted ultrasonic signal is reflected, wherein a temperature of the conductive medium when the ultrasonic sensor emits the m ultrasonic signals is the updated temperature;
   superimposing m updated echo signals to obtain an updated accumulated sum signal; and
   updating the number of ultrasonic emission times m based on an intensity of the updated accumulated sum signal and a preset signal intensity range.

4. The method according to claim 3, wherein the updating the number of ultrasonic emission times m based on an intensity of the updated accumulated sum signal and a preset signal intensity range, comprises:

   When the intensity of the updated accumulated sum signal is within the signal intensity range, updating the number of ultrasonic emission times m to remain m;
   when the intensity of the updated accumulated sum signal is out of the signal intensity range, determining an updated number of ultrasonic emission times corresponding to the updated temperature according to a following formula:

$$N_{update} = m * P_{target}/P_{sample}$$

   wherein, $N_{update}$ is used to indicate the updated number of ultrasonic emission times, $P_{target}$ is used to indicate a median of the signal intensity range, and $P_{sample}$ is used to indicate an intensity value of the updated accumulated sum signal; and
   updating the number of ultrasonic emission times m to the updated number of ultrasonic emission times.

5. The method according to claim 3, wherein, when the ultrasonic sensor emits the m ultrasonic signals, there is no finger pressing on the pressing surface, when the updated temperature of the conductive medium is acquired, there is no finger pressing on the pressing surface; and
   when the ultrasonic sensor emits the n ultrasonic signals to the conductive medium, there is a finger pressing on the pressing surface, when the current temperature of the conductive medium is acquired, there is a finger pressing on the pressing surface.

6. The method according to any one of claims 3-5, wherein the first mapping information comprises the temperature of the conductive medium, a number of ultrasonic emission times mapped to the temperature of the conductive medium, and an update state of the number of ultrasonic emission times;
   the determining the number of ultrasonic emission times n based on the current temperature and first mapping information, comprises:

   determining a number of ultrasonic emission times mapped to the current temperature, based on the current temperature and the first mapping information;
   if an update state of the number of ultrasonic emission times mapped to the current temperature is marked as updated, determining the number of ultrasonic emission times mapped to the current temperature as the number of ultrasonic emission times n; or
   if the update state of the number of ultrasonic emission times mapped to the current temperature is not marked as updated, determining the number of ultrasonic emission times n, based on an update state of a number of ultrasonic emission times mapped to at least one candidate temperature adjacent to the current temperature.

7. The method according to claim 6, wherein the determining the number of ultrasonic emission times n, based on an update state of a number of ultrasonic emission times mapped to at least one candidate temperature adjacent to the current temperature, comprises:

   if there is a candidate temperature among the at least one candidate temperature whose mapped number of ultrasonic emission times is marked as updated, determining a number of ultrasonic emission times mapped to the candidate temperature whose update state of the mapped number of ultrasonic emission times is marked as updated and whose absolute difference from the current temperature is the smallest, as the number of ultrasonic emission times n; or

if there is no candidate temperature among the at least one candidate temperature whose mapped number of ultrasonic emission times is marked as updated, determining the number of ultrasonic emission times mapped to the current temperature as the number of ultrasonic emission times n.

8. The method according to claim 6, wherein the determining a number of ultrasonic emission times mapped to the current temperature, based on the current temperature and the first mapping information, comprises:

determining a number of ultrasonic emission times mapped to a temperature closest to the current temperature in the first mapping information as the number of ultrasonic emission times mapped to the current temperature.

9. The method according to any one of claims 2-5, wherein the first mapping information comprises a mapping curve between the temperature of the conductive medium and the number of ultrasonic emission times;

the determining the number of ultrasonic emission times n based on the current temperature and first mapping information, comprises:

mapping the current temperature to the number of ultrasonic emission times n using the mapping curve.

10. The method according to any one of claims 1-5, wherein the determining a number of ultrasonic emission times n based on the current temperature, comprises:

determining the number of ultrasonic emission times n, based on the current temperature and a preset number of high-voltage pulses output to a piezoelectric chip when emitting ultrasonic signals.

11. The method according to any one of claims 1-5, wherein the performing fingerprint detection based on the echo signal, comprises:

superimposing n echo signals to obtain a current accumulated sum signal, analyzing fingerprint image data based on the current accumulated sum signal, and performing fingerprint detection based on the fingerprint image data.

12. An apparatus for detecting a fingerprint with ultrasonic waves, comprising:

an acquisition module, configured to acquire a current temperature and/or a current film application state of a conductive medium, wherein a first side surface of the conductive medium is attached to an ultrasonic sensor, and a second side surface of the conductive medium provides a pressing surface;

an ultrasonic emission times determination module, configured to determine a number of ultrasonic emission times n based on the current temperature and/or the current film application state, wherein n is a positive integer;

a signal collection module, configured to control the ultrasonic sensor to emit ultrasonic signals n times to the conductive medium, and to receive an echo signal formed after each emitted ultrasonic signal is reflected; and

a fingerprint detection module, configured to perform fingerprint detection based on the echo signal.

13. The apparatus according to claim 12, wherein, the ultrasonic emission times determination module is configured to:

determine the number of ultrasonic emission times n based on the current temperature and first mapping information, where the first mapping information is used to indicate a mapping relationship between a temperature of the conductive medium and the number of ultrasonic emission times; or

determine the number of ultrasonic emission times n based on the current film application state and second mapping information, where the second mapping information is used to indicate a mapping relationship between a film application state of the conductive medium and the number of ultrasonic emission times; or

determine the number of ultrasonic emission times n based on a current parameter combination and third mapping information, where the current parameter combination comprises the current temperature and the current film application state, and the third mapping information is used to indicate a mapping relationship between the temperature and the film application state of the conductive medium and the number of ultrasonic emission times.

14. The apparatus according to claim 13, wherein the apparatus further comprises an update module, and the update module is configured to update the first mapping information, and configured to:

acquire an updated temperature of the conductive medium; determine a number of ultrasonic emission times m mapped to the updated temperature, based on the updated temperature and the first mapping information; wherein m is a positive integer; control the ultrasonic sensor to emit ultrasonic signals m times to the conductive medium, and receive an updated echo signal formed after each emitted ultrasonic signal is reflected, wherein a temperature of the conductive medium when the ultrasonic sensor emits the m ultrasonic signals is the updated temperature; superimpose m updated echo signals to obtain an updated accumulated sum signal; and update the number of ultrasonic emission times m based on an intensity of the updated accumulated sum signal and a preset signal intensity range.

15. The apparatus according to claim 14, wherein, when the ultrasonic sensor emits the m ultrasonic signals, there is no finger pressing on the pressing surface, when the updated temperature of the conductive medium is acquired, there is no finger pressing on the pressing surface; and
when the ultrasonic sensor emits the n ultrasonic signals to the conductive medium, there is a finger pressing on the pressing surface, when the current temperature of the conductive medium is acquired, there is a finger pressing on the pressing surface.

16. The apparatus according to claim 14 or 15, wherein the first mapping information comprises the temperature of the conductive medium, a number of ultrasonic emission times mapped to the temperature of the conductive medium, and an update state of the number of ultrasonic emission times;

the ultrasonic emission times determination module is configured to: determine a number of ultrasonic emission times mapped to the current temperature, based on the current temperature and the first mapping information;
if an update state of the number of ultrasonic emission times mapped to the current temperature is marked as updated, determine the number of ultrasonic emission times mapped to the current temperature as the number of ultrasonic emission times n; or
if the update state of the number of ultrasonic emission times mapped to the current temperature is not marked as updated, determine the number of ultrasonic emission times n, based on an update state of a number of ultrasonic emission times mapped to at least one candidate temperature adjacent to the current temperature.

17. The apparatus according to claim 16, wherein the ultrasonic emission times determination module is further configured to: if there is a candidate temperature among the at least one candidate temperature whose mapped number of ultrasonic emission times is marked as updated, determine the number of ultrasonic emission times mapped to the candidate temperature whose update state of the mapped number of ultrasonic emission times is marked as updated and whose absolute difference from the current temperature is the smallest, as the number of ultrasonic emission times n; or
if there is no candidate temperature among the at least one candidate temperature whose mapped number of ultrasonic emission times is marked as updated, determine the number of ultrasonic emission times mapped to the current temperature as the number of ultrasonic emission times n.

18. The apparatus according to any one of claims 12-15, wherein the fingerprint detection module is configured to: superimpose the n echo signals to obtain a current accumulated sum signal, analyze fingerprint image data based on the current accumulated sum signal, and perform fingerprint detection based on the fingerprint image data.

19. An electronic device, comprising: a processor, a memory, a communications interface and a communications bus, wherein the processor, the memory and the communications interface communicate with each other via the communications bus; and
the memory is configured to store at least one executable instruction, the executable instruction enables the processor to perform the method according to any one of claims 1-11.

20. A computer storage medium, storing a computer program thereon, the program, when executed by a processor, implements the method according to any one of claims 1-11.

acquiring a current temperature of a conductive medium, where a first side surface of the conductive medium is attached to an ultrasonic sensor, and a second side surface of the conductive medium provides a pressing surface

S110

determining a number of ultrasonic emission times n based on the current temperature; where n is a positive integer

S120

controlling the ultrasonic sensor to emit ultrasonic signals n times to the conductive medium, and receiving an echo signal formed after each emitted ultrasonic signal is reflected

S130

S140

performing fingerprint detection based on the echo signal

FIG. 1

first side surface          second side surface

screen medium

ultrasonic sensor

$P_0$

$L1-\triangle P_1$
emitting ultrasonic signals

$L2-\triangle P_2$

P

$L3-\triangle P_3$
receiving echo signals

FIG. 2

S210

acquiring an updated temperature of the conductive medium

S220

determining a number of ultrasonic emission times mapped to the updated temperature, based on the updated temperature and the first mapping information

S230

controlling the ultrasonic sensor to emit ultrasonic signals m times to the conductive medium, and receiving an updated echo signal formed after each emitted ultrasonic signal is reflected, where m is equal to the number of ultrasonic emission times mapped to the updated temperature, a temperature of the conductive medium when the ultrasonic sensor emits the m ultrasonic signals is the updated temperature; superimposing the m updated echo signals to obtain an updated accumulated sum signal

S240

updating the number of ultrasonic emission times m based on an intensity of the updated accumulated sum signal and a preset signal intensity interval

S110

acquiring a current temperature of a conductive medium

S121

determining the number of ultrasonic emission times n based on the current temperature and first mapping information, where the first mapping information is used to indicate a mapping relationship between a temperature of the conductive medium and the number of ultrasonic emission times

S130

controlling the ultrasonic sensor to emit ultrasonic signals n times to the conductive medium, and receiving an echo signal formed after each emitted ultrasonic signal is reflected, where n is equal to the number of ultrasonic emission times n

S140

performing fingerprint detection based on the echo signal

FIG. 3

S401

m updated echo signals

S402

determining the intensity of an
updated accumulated sum signal
obtained by superimposing the m
updated echo signals

S403

determining whether
the intensity of the updated
accumulated sum signal is
within a preset signal
intensity interval

no

yes

S404

updating the number of ultrasonic
emission times mapped to an updated
temperature in the first mapping
information to remain m, and
determining an update state of the
number of ultrasonic emission times
mapped to the updated temperature to
be updated

S405

calculating an updated number of ultrasonic
emission times corresponding to the
updated temperature, updating the number
of ultrasonic emission times mapped to the
updated temperature in the first mapping
information to the updated number of
ultrasonic emission times, and determining
the update state of the number of ultrasonic
emission times mapped to the updated
temperature to be updated

FIG. 4

S501

acquiring a current
temperature

S502

determining
whether the number of
ultrasonic emission times mapped
to the current temperature in first
mapping information is marked
as updated

no

S504

determining
whether an update state of
the number of ultrasonic emission times
mapped to at least one candidate
temperature adjacent to the current
temperature in the first mapping
information is
updated

yes

no

S503

determining the number of
ultrasonic emission times mapped
to the current temperature as the
number of ultrasonic emission
times n

yes

S505

determining the number of ultrasonic
emission times mapped to the candidate
temperature whose update state of the
mapped number of ultrasonic emission times
is marked as updated and whose absolute
difference from the current temperature is the
smallest as the number of ultrasonic emission
times n

FIG. 5

apparatus for detecting an
ultrasonic fingerprint

acquisition module 601

ultrasonic emission times
determination module 602

signal collection module
603

fingerprint detection
module 604

FIG. 6

electronic device

Memory 706

program
710

processor
702

bus
708

communications
interface 704

FIG. 7

## INTERNATIONAL SEARCH REPORT

| | International application No. |
|---|---|
| | **PCT/CN2024/138588** |

**A. CLASSIFICATION OF SUBJECT MATTER**

G06V 40/13(2022.01)i

According to International Patent Classification (IPC) or to both national classification and IPC

**B. FIELDS SEARCHED**

Minimum documentation searched (classification system followed by classification symbols)

IPC: G06V, G06K, G06F

Documentation searched other than minimum documentation to the extent that such documents are included in the fields searched

Electronic data base consulted during the international search (name of data base and, where practicable, search terms used)

DWPI, CNABS, WPABS, CNTXT, ENTXT, ENTXTC, USTXT, CJFD, CNKI: 汇顶, 超声, 指纹, 温度, 传感器, 重复, 反复, 发射, 次数, 厚度, 类型, 材料, 采集, 打码, 捕获, 扫描, 激发, 检测, 材质, 介质, ultrasound, fingerprint, temperature, sensor, repetition, emission, number, thickness, type, material, acquisition, code, capture, scan, excitation, detection, medium

**C. DOCUMENTS CONSIDERED TO BE RELEVANT**

| Category* | Citation of document, with indication, where appropriate, of the relevant passages | Relevant to claim No. |
|---|---|---|
| PX | CN 118430031 A (SHENZHEN GOODIX TECHNOLOGY CO., LTD.) 02 August 2024 (2024-08-02) description, paragraphs 26-160 | 1-20 |
| X | CN 115311695 A (SHENZHEN GOODIX TECHNOLOGY CO., LTD.) 08 November 2022 (2022-11-08) description, paragraphs 27-85 | 1-20 |
| X | CN 115937916 A (SHENZHEN GOODIX TECHNOLOGY CO., LTD.) 07 April 2023 (2023-04-07) description, paragraphs 30-150 | 1-20 |
| Y | CN 115311695 A (SHENZHEN GOODIX TECHNOLOGY CO., LTD.) 08 November 2022 (2022-11-08) description, paragraphs 27-85 | 1-20 |
| Y | CN 115937916 A (SHENZHEN GOODIX TECHNOLOGY CO., LTD.) 07 April 2023 (2023-04-07) description, paragraphs 30-150 | 1-20 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 March 2025** | **13 March 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 697 290 A1**

## INTERNATIONAL SEARCH REPORT

| | International application No. |
|---|---|
| | **PCT/CN2024/138588** |

### C.    DOCUMENTS CONSIDERED TO BE RELEVANT

| Category* | Citation of document, with indication, where appropriate, of the relevant passages | Relevant to claim No. |
|---|---|---|
| Y | WO 2024039050 A1 (SAMSUNG ELECTRONICS CO., LTD.) 22 February 2024 (2024-02-22)<br>    description, paragraphs 212-288 | 1-20 |
| A | CN 110286738 A (GUANGDONG OPPO MOBILE TELECOMMUNICATIONS CORP., LTD.) 27 September 2019 (2019-09-27)<br>    entire document | 1-20 |
| A | CN 110309752 A (GUANGDONG OPPO MOBILE TELECOMMUNICATIONS CORP., LTD.) 08 October 2019 (2019-10-08)<br>    entire document | 1-20 |
| A | CN 110384470 A (SONOSCAPE MEDICAL CORP.) 29 October 2019 (2019-10-29)<br>    entire document | 1-20 |
| A | CN 112612975 A (BEIJING YOUGUA INFORMATION TECHNOLOGY CO., LTD.) 06 April 2021 (2021-04-06)<br>    entire document | 1-20 |
| A | CN 112770197 A (WEBANK CO., LTD.) 07 May 2021 (2021-05-07)<br>    entire document | 1-20 |
| A | CN 118020094 A (QUALCOMM INC.) 10 May 2024 (2024-05-10)<br>    entire document | 1-20 |

Form PCT/ISA/210 (second sheet) (July 2022)

## INTERNATIONAL SEARCH REPORT
### Information on patent family members

International application No.

**PCT/CN2024/138588**

| Patent document cited in search report | | | Publication date (day/month/year) | Patent family member(s) | | | Publication date (day/month/year) |
|---|---|---|---|---|---|---|---|
| CN | 118430031 | A | 02 August 2024 | CN | 118430031 | B | 17 December 2024 |
| CN | 115311695 | A | 08 November 2022 | CN | 115311695 | B | 13 September 2024 |
| | | | | WO | 2024055711 | A1 | 21 March 2024 |
| | | | | US | 2024412554 | A1 | 12 December 2024 |
| CN | 115937916 | A | 07 April 2023 | | None | | |
| WO | 2024039050 | A1 | 22 February 2024 | KR | 20240025422 | A | 27 February 2024 |
| CN | 110286738 | A | 27 September 2019 | EP | 3757876 | A1 | 30 December 2020 |
| | | | | EP | 3757876 | B1 | 12 October 2022 |
| | | | | US | 2020410193 | A1 | 31 December 2020 |
| | | | | US | 11132524 | B2 | 28 September 2021 |
| | | | | WO | 2021000722 | A1 | 07 January 2021 |
| | | | | IN | 202014025713 | A | 01 January 2021 |
| | | | | IN | 455555 | B | 06 October 2023 |
| | | | | CN | 110286738 | B | 08 June 2021 |
| CN | 110309752 | A | 08 October 2019 | CN | 110309752 | B | 10 September 2021 |
| CN | 110384470 | A | 29 October 2019 | CN | 110384470 | B | 28 September 2021 |
| CN | 112612975 | A | 06 April 2021 | | None | | |
| CN | 112770197 | A | 07 May 2021 | CN | 112770197 | B | 23 August 2024 |
| CN | 118020094 | A | 10 May 2024 | WO | 2023044210 | A1 | 23 March 2023 |
| | | | | TW | 202411879 | A | 16 March 2024 |
| | | | | EP | 4405921 | A1 | 31 July 2024 |
| | | | | US | 2023085885 | A1 | 23 March 2023 |
| | | | | US | 11800342 | B2 | 24 October 2023 |
| | | | | IN | 202447006067 | A | 23 February 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410777108